(19) **Europäisches Patentamt**

**European Patent Office**

**Office européen des brevets**

(11) **EP 0 757 481 B1**

(12) **EUROPEAN PATENT SPECIFICATION**

(45) Date of publication and mention
of the grant of the patent:
**12.09.2001 Bulletin 2001/37**

(51) Int Cl.⁷: **H04N 5/44**, H04N 11/16

(21) Application number: **96112393.2**

(22) Date of filing: **31.07.1996**

(54) **Raster interpolation device, vertical reinforcing signal processing device, decoder and television receiver**

Vorrichtung zur Rasterinterpolation, Vorrichtung zur Verarbeitung eines vertikalen Verstärkungssignals, Dekoder und Fernsehempfänger

Dispositif d'interpolation de trame, dispositif de traitement d'un signal vertical de renforcement, décodeur et récepteur de télévision

(84) Designated Contracting States:
**DE ES FI FR GB IT NL SE**

(30) Priority: **02.08.1995 JP 19724095**

(43) Date of publication of application:
**05.02.1997 Bulletin 1997/06**

(73) Proprietor: **SONY CORPORATION**
**Tokyo (JP)**

(72) Inventors:
• **Kanou, Mamoru**
**Shinagawa-ku, Tokyo (JP)**
• **Tatehira, Yasushi**
**Shinagawa-ku, Tokyo (JP)**
• **Kita, Hiroyuki**
**Shinagawa-ku, Tokyo (JP)**

(74) Representative: **Müller, Frithjof E., Dipl.-Ing. et al**
**Patentanwälte**
**MÜLLER & HOFFMANN,**
**Innere Wiener Strasse 17**
**81667 München (DE)**

(56) References cited:
**EP-A- 0 357 144          EP-A- 0 607 561**
**US-A- 5 438 368**

• **SILVERBERG M: "DER ENTWICKLUNGSSTAND: PALPLUS-ENDGERATE" RADIO FERNSEHEN ELEKTRONIK, vol. 43, no. 10, 1 October 1994 (1994-10-01), page 18, 20, 22/23 XP000484120 ISSN: 1436-1582**
• **BUCHNER P: "LINE 23 SIGNALLING" IMAGE TECHNOLOGY (JOURNAL OF THE BKSTS), vol. 76, no. 6, 1 July 1994 (1994-07-01), pages 125-127, XP000444745 ISSN: 0950-2114**

**Description**

BACKGROUND OF THE INVENTION

Field of the Invention

This invention relates to a raster interpolation device and a television receiver and more particularly to a raster interpolation device and a television receiver which are preferable in the case that a broadcasting program transmitted in a PAL plus broadcasting system.

Description of Related Art

In recent years, there have been appeared consecutively wireless type and wire type new media under a remarkable development of an electrical communication technology. In Europe, a PAL plus broadcasting system in which both a wide aspect ratio of an image and a high resolution of an image are attained while keeping a compatibility with a PAL (Phase Alternation by Line) of the present broadcasting system has experienced its experimental stage and is now facing against its practical stage. In this PAL plus system television receiver in which the PAL plus broadcasting system is decoded, the effective number of rasters can be increased as compared with that of the prior art by performing raster interpolation with a reinforcing signal called as a helper signal and further a superior image can be obtained by supplementing a resolution of an image in a vertical direction.

In addition, in this PAL plus broadcasting system, although special improving means is not provided for horizontal resolution as compared with that of the prior art PAL broadcasting system, a three-dimensional Y/C separation technology called as a color plus is applied, resulting in that horizontal resolution and color separation are improved to get total image quality improvement. The color plus herein defined is a three dimensional Y/C separation technology utilizing inter-image field correlation of images. In the color plus, processing called as pre-combing is carried out at a broadcasting station in order to remove a crosstalk between a brightness signal and a color signal. At a receiving side, the brightness signal and the color signal can be separated from each other without any crosstalk by adding pre-combed PAL plus complex image signals between the fields. Since the adding is carried out between the fields as described above, application of this adding operation to images showing a remarkable vigorous motion may cause various deterioration in image quality.

In addition, it has already been described that the raster interpolation is carried out with the vertical reinforcing signal called as a helper signal in PAL plus broadcasting system, although an image quality is substantially deteriorated if the interpolation is performed in a frame unit when the image in the first field (hereinafter called as an A field) and the image in the second field (hereinafter called as a B field) within one frame are substantially different from each other even in the case that the interpolation is performed.

As described above, the color plus processing and the raster interpolation are made different for the images in the PAL plus broadcasting. Due to this fact, in the PAL plus broadcasting system, the transmitting side (a broadcasting station) transmits in multiplex mode a mode discrimination signal (1 bit) indicating whether or not the processing is carried out in a field unit through an image or the processing is carried out in a frame unit to the 23th line of an image signal so as to enable positive processing to be carried out. In addition, the discriminating signal for judging presence or non-presence of the aforesaid pre-combing state is also concurrently multiplexed on the 23th line.

The mode indicated by the aforesaid mode discriminating signal is called as either a film mode or a camera mode. In the case of the film mode, images in the A field and the B field in the same frame are produced from the same image. Images or the like in a tele-cinema of which originals are 24 frames/ second correspond to this case. In this case, Y/C separation is not adopted for the motion, but the color plus processing is always carried out and the raster interpolation is carried out by interframe processing. In addition, in the case of the camera mode, the images in the two fields in the frame are of a separate timing. In this case, as for the Y/C separation, motion adaptation is carried out. In an animation region, the two-dimensional Y/C separation is carried out through a line comb filter and in turn in a still image region, three-dimensional Y/C separation through a color plus is carried out. The raster interpolation is always carried out by inter-field processing.

An introduction to the PALplus standard showing the basic architectures of the PALplus system, decoding and receiver is given in Silverberg, M.: "Der Entwicklungsstand: PALplus-Endgeräte" Radio Fernsehen Elektronik, vol. 43, no. 10, October 1, 1994 (1994-10-01), page 18, 20, 22/23, XP 000 484 120, ISSN: 1436-1582.

A detailed description of a PALplus receiver similar to that described in the following with reference to Figures 9 to 11 is given in EP-A-0 607 561.

## SUMMARY OF THE INVENTION

The raster interpolation device of the present invention is operated such that an image signal at a main image is transmitted in a form of letter box, a broadcasting signal in which a brightness reinforcing signal for reinforcing vertical resolution of a brightness signal of the image signal at the main image is received by using an effective line except a portion where the image signal of the main image is transmitted so as to perform processing for the received signal, comprising first memory means for storing the received brightness signal and brightness reinforcing signal; second memory means for storing the received color signal; control means for controlling writing-in operation and reading-out operation for the first memory means and the second memory means by supplying the same control signal to the first memory means and the second memory means; first interpolation means for performing raster interpolation in response to the brightness signal and the brightness reinforcing signal read out of the first memory means in accordance with the control signal; first one line delay means for delaying the raster-interpolated brightness signal by one line under a film mode; and second interpolation means for performing raster interpolation in response to a color signal read out of the second memory means in accordance with the control signal.

In contrast to the raster-interpolation device of the prior art, in the raster interpolation device of the present invention, a same control signal is supplied to the first memory means for storing the brightness signal and the brightness reinforcing signal and to the second memory means for storing the color signal ,through the control means. To achieve this the raster interpolation for the brightness signal is carried out by the first interpolation means in response to the brightness signal and the brightness reinforcing signal stored in the first memory means read out in accordance with the control signal and under a film mode the raster-interpolated brightness signal is delayed by one line, further the raster interpolation for the color signal is carried out by the second interpolation means in response to the color signal stored in the second memory means read out in accordance with the color signal stored in the second memory means. Accordingly, it is possible to make a common control signal for use in reading out the brightness signal and the color signal.

In addition, the television receiver of the present invention is operated such that an image signal at a main image is transmitted in a form of letter box, a broadcasting signal in which a brightness reinforcing signal for reinforcing vertical resolution of a brightness signal of the image signal at the main image is received by using an effective line except a portion where the image signal of the main image is transmitted so as to perform processing for the received signal, comprising receiving means for receiving a broadcasting signal; separation means for separating the brightness signal and the color signal from the received signal; discriminating means for detecting a discriminating signal from the received signal and discriminating mode information of the image signal; first memory means for storing the received brightness signal and the brightness reinforcing signal; second memory means for storing the received color signal; and control means for controlling writing-in operation and reading-out operation for the first memory means and the second memory means by supplying the same control signal to the first memory means and the second memory means in response to the mode information discriminated by the discriminating means; first interpolation means for performing raster interpolation in response to a brightness signal read out of said first memory means in accordance with said control signal and said brightness reinforcing signal; first one line delay means for delaying the raster-interpolated brightness signal by one line under a film mode; and second interpolation means for performing raster interpolation in response to a color signal read out of said second memory means in accordance with said control signals.

In the television receiver of the present invention, the brightness signal, the color signal and the brightness reinforcing signal are separated from the signal received by the receiving means, the brightness signal and the brightness reinforcing signal are stored in the first memory means and the color signal is stored in the second memory means. In addition, the discriminating signal is detected from the received signal so as to discriminate the mode information of the image signal. The writing-in operation and the reading-out operation for the first memory means and the second memory means are controlled by supplying the same control signal to the first memory means and the second memory means in response to the mode information discriminated by this discriminating means.
Accordingly, it is possible to make control signals for reading out the brightness signal and the color signal in common to each other.

## BRIEF DESCRIPTION OF THE DRAWINGS

Fig. 1 is a block diagram for showing a configuration of one preferred embodiment of the raster interpolation device of a PAL plus broadcasting system in which the raster interpolation device and the vertical reinforcing signal processing device of the present invention are applied.

Fig. 2 is a block diagram for showing a configuration of a brightness signal vertical filtering processing part during a film mode state shown in Fig. 1.

Fig. 3 is a block diagram for showing a configuration of a color signal vertical filtering processing part during a film mode state shown in Fig. 1.

Fig. 4 is a block diagram for showing a configuration of a brightness signal vertical filtering processing and a color signal vertical filtering processing part shown in Fig. 1.

Fig. 5 is a view for illustrating an operation of each selector shown in Fig. 4.

Fig. 6 is a block diagram for showing a configuration of another preferred embodiment of the raster interpolation device of a PAL plus broadcasting system in which the raster interpolation device and the vertical reinforcing signal processing device of the present invention are applied.

Fig. 7 is a block diagram for showing a configuration of one preferred embodiment of a decoder for a PAL plus broadcasting system to which the decoder of the present invention is applied.

Fig. 8 is a block diagram for showing a configuration of one preferred embodiment of a television receiver for a PAL plus broadcasting system to which the television receiver of the present invention is applied.

Fig. 9 is a block diagram for showing a configuration of one example of a signal demodulating circuit of the prior art PAL plus broadcasting system television receiver.

Figs. 10A to 10C are views for showing concepts of raster interpolation of the PAL plus broadcasting system.

Fig. 11 is a block diagram for showing a configuration of one example of the prior art raster interpolation processing part of the PAL plus broadcasting system.

Fig. 12 is a view for showing a relation of a helper changing-over control signal, a helper signal and a main image signal.

Figs. 13A and 13B are views of concept of an input signal of a brightness signal field memory in a film mode.

Figs. 14A to 14C are views of concept of an output signal of a brightness signal field memory in a film mode.

Figs. 15A to 15C are views of concept of an input/output signal of the color signal field memory in a film mode.

Figs. 16A and 16B are views of concept of an input signal of a field memory in a camera mode.

Figs. 17A to 17C are views of concept of an output signal of a field memory in a camera mode.

Fig. 18 is a block diagram for showing a configuration of one example of the vertical filtering processing part for the brightness signal in a film mode of the prior art.

Fig. 19 is a block diagram for showing a configuration of one example of the vertical filtering processing part for a color signal in a film mode of the prior art.

Fig. 20 is a view for showing allocation of a signal in the case that the 27th line is calculated.

Fig. 21 is a block diagram for showing a configuration of one example of the vertical filtering processing part of a brightness signal in a camera mode of the prior art.

Fig. 22 is a block diagram for showing a configuration of one example of the vertical filtering processing part of a color signal in a camera mode of the prior art.

Fig. 23 is a view for showing allocation of a signal in the case that the 27th line is calculated.

DESCRIPTION OF THE PREFERRED EMBODIMENTS

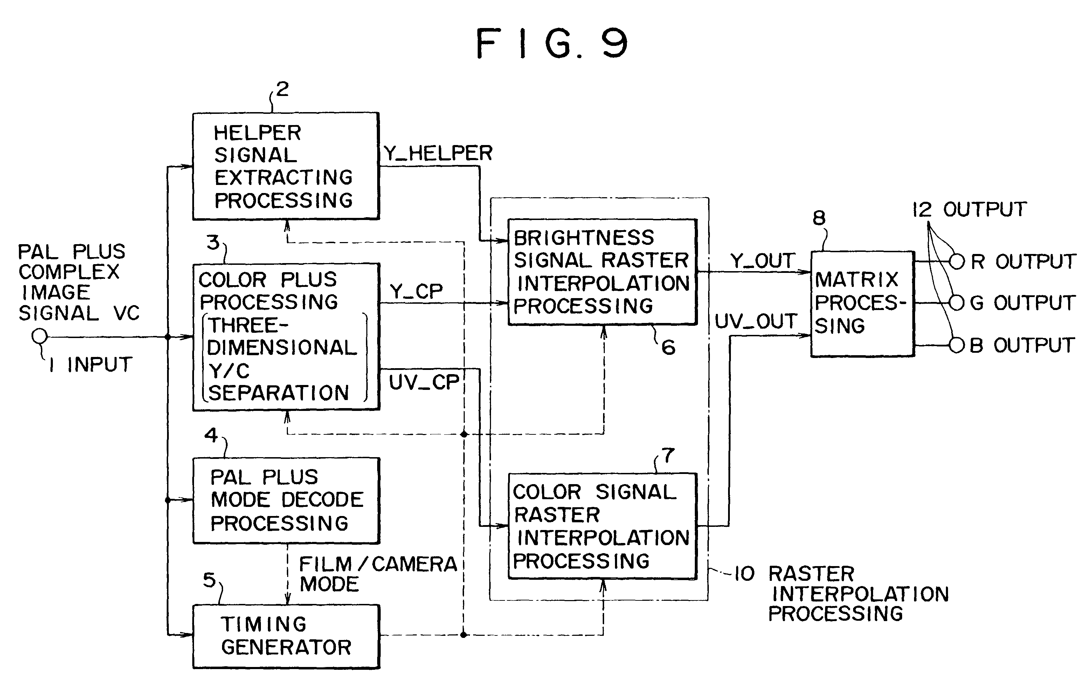

Referring now to Fig. 9, a summary of the decoding circuit (decoder) of the PAL plus system television receiver will be described.

Essential parts of the image signal processing device of the PAL plus system television receiver are comprised of an input 1 to which the PAL plus complex image signal as shown in Fig. 9 is inputted; a helper signal extracting processing part 2 for decoding a helper signal from the PAL plus complex image signal and extracting it; a color plus processing part 3 for performing color plus processing with three-dimensional Y/C separation and the like; a brightness signal raster interpolation processing part 6 for performing raster interpolation for the brightness signal in reference to a brightness signal (Y_CP) and a helper signal (Y_HELPER) acting as a main image of the present invention; a color signal raster interpolation processing part 7 for performing color signal raster interpolation; a mode decode processing part (mode decoder) 4 for discriminating various modes; a timing generating part 5 for generating and supplying various timing signals to each of the aforesaid processing parts in response to the film mode/camera mode; and a matrix processing part (MATRIX part) 8 for converting both a brightness signal Y_OUT and a color difference signal UV_OUT into RGB signals.

In Fig. 9, the PAL plus complex image signal inputted from the input part 1 is inputted in parallel with the color plus processing part 3, the helper signal processing part 2, the timing generator part 5 and the mode decode processing part 4.

At the mode decode processing part 4, decoding and mode discrimination for the discrimination control signal multiplexed to the vertical blanking part (the 23th line) are carried out. A specific important matter of this mode consists in discrimination of the aforesaid camera mode/film mode and a discrimination of presence or non-presence of the three-dimensional pre-combing, respectively. The mode decode processing part 4 transmits these pieces of information to the timing generator 5, wherein the timing generator 5 changes over various timing signals and outputs them.

At the color plus processing part 3, the three-dimensional Y/C separation is carried out using the three-dimensional filter or the like corresponding to a characteristic of the complex image signal transmitted at the transmitting side while being three-dimensional pre-combed. The pre-combing is carried out by performing predetermined calculation such as an adding operation in which the brightness signal and the color signal are added to each other between each of the fields while using the field memory. Provided in the case that the three-dimensional pre-combing is not carried out at the transmitting side, the two-dimensional Y/C separation is carried out. In addition, at the color plus processing part 3, the processing corresponding to each of the modes is performed.

Under the film mode, the raster interpolation is carried out such that the interframe processing is performed in reference to the images in the A field and B field within the same frame and the Y/C separation is also carried out in an non-adaptation state. In the camera mode, the two fields within a frame are images of separate timings and the Y/C separation is motion adapted. These camera mode and film mode are also used in the raster interpolation.

At the helper signal processing part 2, the reinforcing signals which are present at the upper and lower non-image portions of the PAL plus complex image signal, modulated and transmitted by the color transmitting signal are demodulated and their amplitudes are adjusted (the reinforcing signal processed through this processing is called as a helper signal hereinafter). The brightness signal (Y_CP) outputted from the aforesaid color plus processing part 3 and the output (Y_HELPER) of the helper signal processing part 2 are inputted to the brightness signal raster interpolation processing part 6.

At the timing generator 5, various kinds of timing signals required for the television receiver of PAL plus system are generated and outputted in response to a result of decoding at the aforesaid mode decode processing part 4. These signals also include a control signal for the field memory used in the brightness signal raster interpolation processing part 6 and the color signal raster interpolation processing part 7 and the vertical filtering changing-over control signal.

At the brightness signal raster interpolation processing part 6 constituting the raster interpolation processing part 10, image information at the main image part (mainly the brightness signal) of 215 lines per field are converted into brightness signals with a total number of 287 lines together with helper signals of 72 lines which are internally inserted into the non-image part and transmitted and then the image information are outputted. In addition, the brightness signal raster interpolation processing part 6 is provided with the vertical filter composed of three kinds of field memories and a plurality of line delay elements in order to perform the aforesaid processing and then an operation for assuring a continuity of images damaged by shuffling to be described later is carried out.

Also at the color signal raster interpolation processing part 7, the major image part of 215 lines per field is similarly converted by the inter-field raster interpolation and the like into 287 lines of 4/3 times and outputted. Provided that at the color signal raster interpolation processing part 7, the helper signal is not used for the interpolation calculation. This color signal raster interpolation processing part 7 is, similar to the brightness signal raster interpolation processing part 6, comprised of one kind of field memory and the vertical filter composed of a plurality of line delay elements.

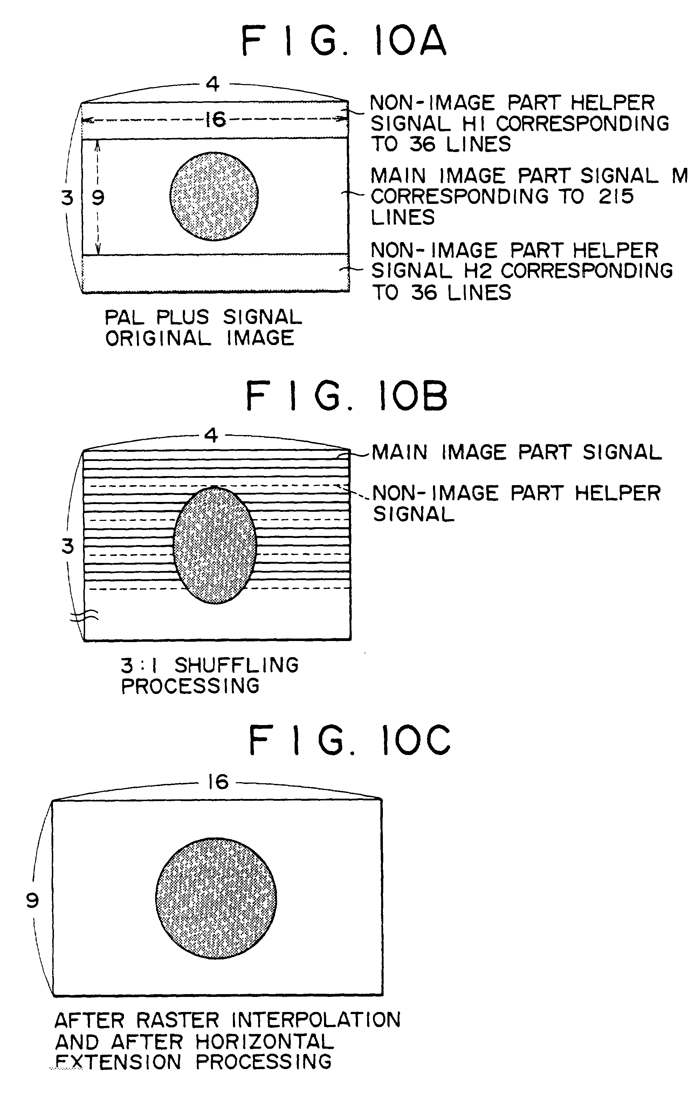

Then, referring to Figs. 10A to 10C, a summary of the raster interpolation of the television receiver of PAL plus system will be described. Fig. 10A is a view for showing schematically a frame of the PAL plus broadcasting signal, Fig. 10B is a view for showing schematically shuffling with a ratio of 3:1 and Fig. 10C is a view for showing an example of a display with an aspect ratio of 16:9.

As shown in Fig. 10A, the first field of the PAL plus broadcasting signal is comprised of a main image part M having 215 lines, and non-image parts H1, H2 which are present at the upper segment and the lower segment of the main image part M and composed of 36 lines, respectively. At the main image part M of the PAL plus broadcasting signal, the image composed of raster with an aspect ratio of 16:9 (215 lines/field) is transmitted and at the upper and lower non-image parts H1, H2 of 36 lines in the main image part M, the helper signal acting as the reinforcing signal for reinforcing the vertical resolution of the brightness signal of the main image part M is transmitted. The second field is also similarly configured. At the television receiver of PAL plus broadcasting system, the shuffling of the image brightness signal using the field memory is carried out for demodulating the PAL plus broadcasting signal having such a signal configuration.

In other words, information of the main image part M is inputted continuously at upper three lines in the screen with a ratio of 4:3 as shown in Fig. 10B, thereafter information within the helper signal H1 is inserted by one line from the upper part and similarly information at the main image part M is inserted in three lines and information within the helper signal H1 is inserted in one line. Upon insertion of the helper signal H1 up to the 36th line, then the first (1) line of the helper signal H2 is inserted. In this way, the shuffling of the main image signal M and the helper signals H1, H2 in a ratio of 3:1 is carried out.

In addition, the image received in a ratio of 4:3 as described above is processed in filtering through the vertical filtering operation and the image is extended in a horizontal direction, thereby it is possible to realize again a wide image with an aspect ratio of 16:9 as shown in Fig. 10C. That is, a viewer (a user) having the television receiver with a wide screen of 16:9 performs decode processing as described above to reproduce the wide image with a ratio of 16:9 and in turn a user having the television receiver with the conventional screen of 4:3 reproduces the conventional image with a ratio of 4:3 (in an image of a letter box type having upper and lower black bands) as shown in Fig. 10A as it is.

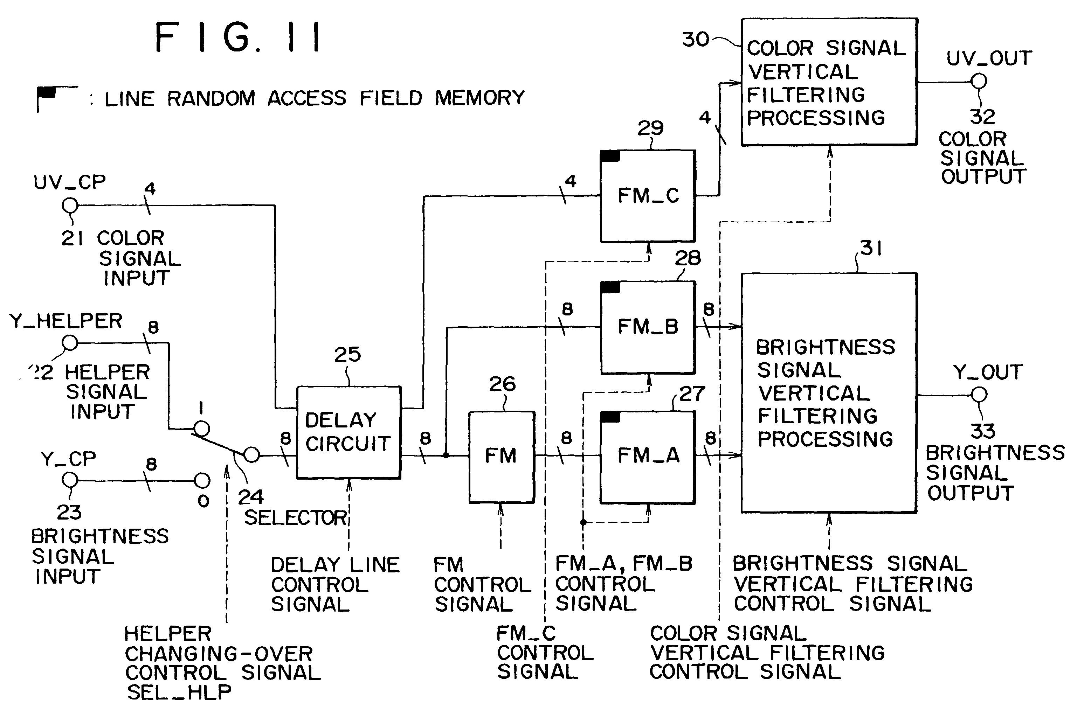

Then, in Fig. 11 is shown the raster interpolation processing part for performing the shuffling for the main image signal and the helper signal as described above.

As shown in Fig. 11, the raster interpolation processing part 10 is comprised of a color signal input part 21, a helper signal input part 22, a brightness signal input part 23, a selector 24 for changing-over between the helper signal and the brightness signal in reference to an input line No., a color signal vertical filtering processing part 30, a brightness signal vertical filtering processing part 31, a color signal output part 32, a brightness signal output part 33, a brightness signal output part 33, field memories of normal four fields for a field memory (FM) 26, a field memory (FM_A) 27, a field memory (FM_B) 28 and a field memory (FM_C) 29, and a delay circuit 25 for adjusting an amount of delay of entire signal.

FM 26 is a field memory for use in delaying the brightness input signal by an amount of 1 field and each of FM_A 27 and FM_B 28 is a line random access field for use in getting the A field brightness signal and the B field brightness signal shuffled with the helper signal. FM_C 29 is used for performing a reading-out operation in compliance with a timing for the brightness signal in respect to the color signal. Provided that since no helper signal is used, the shuffling operation is not carried out.

In addition, since the requisite signal control is made different for each of FM_A 27, FM_B 28 and FM_C 29, respectively, it becomes necessary to provide a separate control signal for each of the memories. (Control signals for FM_A 27 and FM_B 28 are made common to each other.)

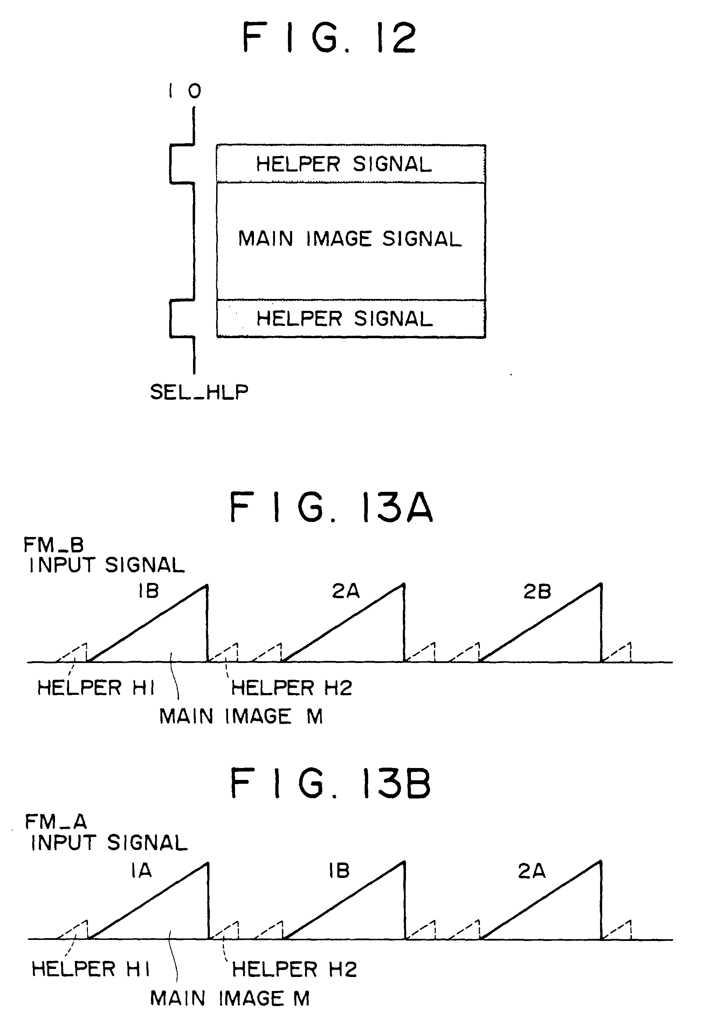

The helper signal is a vertical reinforcing signal with respect to the brightness signal and is overlapped on the upper and lower non-image portions of the letter box screen. Accordingly, since the helper signal to be inputted to the helper signal input part 22 is effective only at the upper and lower non-image portions, the changing-over operation at the selector 24 is properly carried out by the helper changing-over control signal (SEL_HLP signal) in response to whether or not the input brightness signal is a helper signal or a main image signal. This state is shown in Fig. 12. For example, when SEL_HLP signal is at a level 1, the selector 24 changes over the inner connection in such a manner that the signal from the helper signal input part 22 may be supplied to the delay circuit 25. In turn, when SEL_HLP signal is at a level 0, the selector 24 changes over the inner connection in such a manner that the signal from the brightness signal input part 23 may be supplied to the delay circuit 25.

Then, a practical operation at each of the modes in the PAL plus broadcasting will be described.

At first, a field memory control method under the film mode will be described. FM26 causes the A field image brightness signal to be delayed by an amount corresponding to one field to generate a brightness signal displaced by 1 field and outputs it to the field memory FM_A 27 which can be accessed in random between it and a line of the next stage. At this FM_A 27, an address jump is carried out in a line unit to perform a reading-out operation of image from the memory while the aforesaid helper signal is being taken into the main image part through its shuffling. Since the interframe processing is carried out under the film mode, the reading-out of the data is carried out such that the same data is read out over the two fields. Accordingly, a control signal (an FM_A control signal) in which the data in the same field in 1 frame period is read out twice is supplied.

The B field image brightness signal is inputted to the field memory FM_B 28 which can be accessed in random as it is. At this field memory FM_B 28, a data reading-out operation from the memory is carried out while the aforesaid helper signal is being taken into the main image part through the shuffling by an address jumping in a line unit. In addition, a control signal (an FM_B signal) is supplied in the same manner as that of processing the A field image brightness signal in such a way that the same data is read out over the two fields.

Figs. 13A and 13B show a state of the brightness signal when an input and an output for each of the line random access field memories FM_A 27 and FM_B 28 are performed under the film mode. Fig. 13A indicates an image brightness signal to be inputted to FM_B 28 and Fig. 13B indicates an image brightness signal to be inputted to FM_A 27. A signal supplied to FM_A 27 is a signal delayed only by one field through FM 26 in respect to a signal inputted to FM_B 28. In this case, an ordinate indicates a line No. when a memory input is carried out (the main image part M has lines 1 to 215 and each of the helper portions H1 and H2 has lines 1 to 36), and an abscissa indicates a time (t).

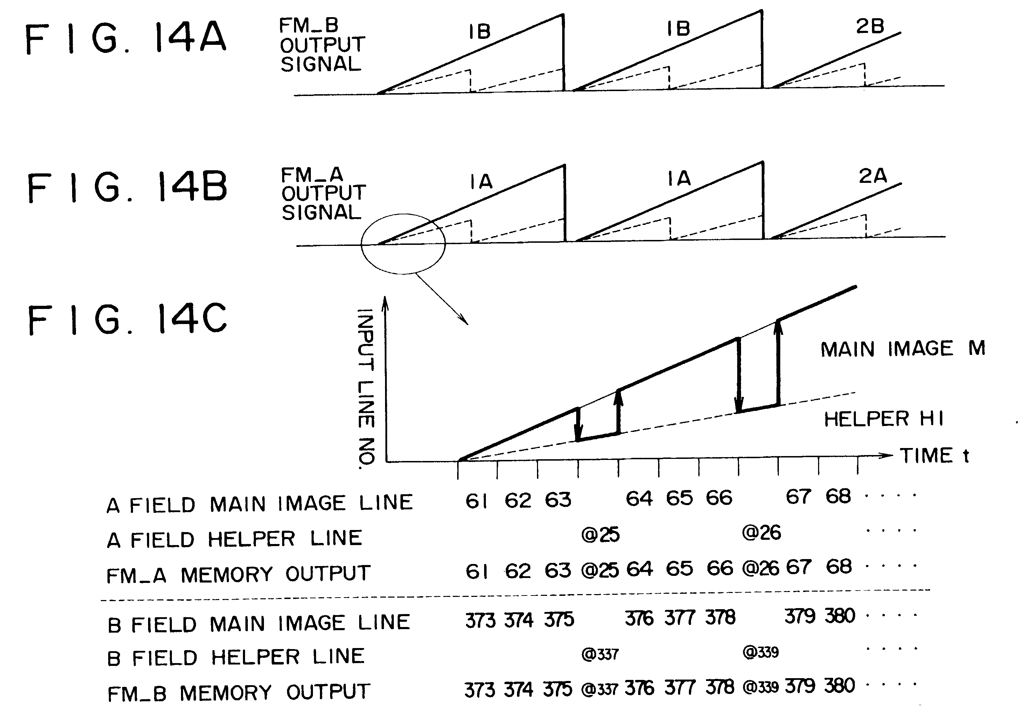

In Figs. 14A to 14C are indicated states in which these input signals are shuffled at FM_A 27 and FM_B 28, respectively. A dotted line schematically indicates the shuffled helper signals. The image signals at the main image part are outputted from each of the field memories 27, 28 for every line as shown in Figs. 14A and 14B with solid lines. That is, same data are read out twice in a continuous manner. Accordingly, at FM_B 28, for example, the A field in the second frame to be inputted in subsequent to the B field (1B) in the first frame shown in Fig. 13A is not stored, but eliminated and 1B is held. In turn, at FM_B 27, the B field in the first frame to be inputted in subsequent to the A field (1A) in the first frame shown in Fig. 13B is not stored but eliminated and 1A is held. With such an arrangement as above, it becomes always possible to read out data in the A field and the B field of the predetermined frame from FM_A 27 and FM_B 28.

In addition, the helper signals are inserted as indicated by dotted lines in Figs. 14A and 14B for the shuffling and outputted. In Fig. 14C is indicated an enlarged view for showing a rising part in Fig. 14B.

In Fig. 14C, an ordinate indicates a line No. when the memory input is carried out and an abscissa indicates a time (t).

During the shuffling, at FM_A 27, information in the main image part M in the lines 61, 62 and 63 are outputted, thereafter the operation returns to the helper signal H1 of the dotted line and then the 25th line of the helper signal is outputted. Subsequently, the data is similarly outputted.

Operation at FM_B 28 is also similarly carried out. These A field brightness signals outputted twice in a continuous manner and B field brightness signals outputted twice in a continuous manner are concurrently inputted to the vertical filtering processing part 31 for the brightness signal. At the aforesaid vertical filtering processing part 31 for the brightness signal, processing supplementing vertical resolution of an image signal is applied in concurrent with processing (smoothing the image) for assuring a continuity of the image damaged during the shuffling and this is outputted as a normal interlace image signal to the brightness signal output part 33.

The image color signal inputted from the color signal input part 21 passes through the delay circuit 25 for adjusting an entire amount of delay and then the color signal is inputted to FM_C 29. As described above, since no helper signal is required for the color signal, the shuffling such as the brightness signal is required in principle, resulting in that a control signal (an FM_C control signal) which is different from control signals of FM_A 27 and FM_B 28 is supplied.

Fig. 15A indicates an image color signal to be inputted to the FM_C 29. Since the color signal has no helper signal as described above, it is not necessary to perform a shuffling operation in respect to the main image part as found in the brightness signal, although a reading-out operation from the memory requires to set a dummy signal per line in respect to 3 lines of the main image part signal so as to convert the main image part of 215 lines per one field into 287 lines of 4/3 times of the former. Any type of signal may be applied for the dummy signal due to the fact that the dummy signal is assumed to be a zero level at an actual vertical filtering operation. In addition, a relation between the ordinate and the abscissa is the same as that of the aforesaid Figs. 13 and 14.

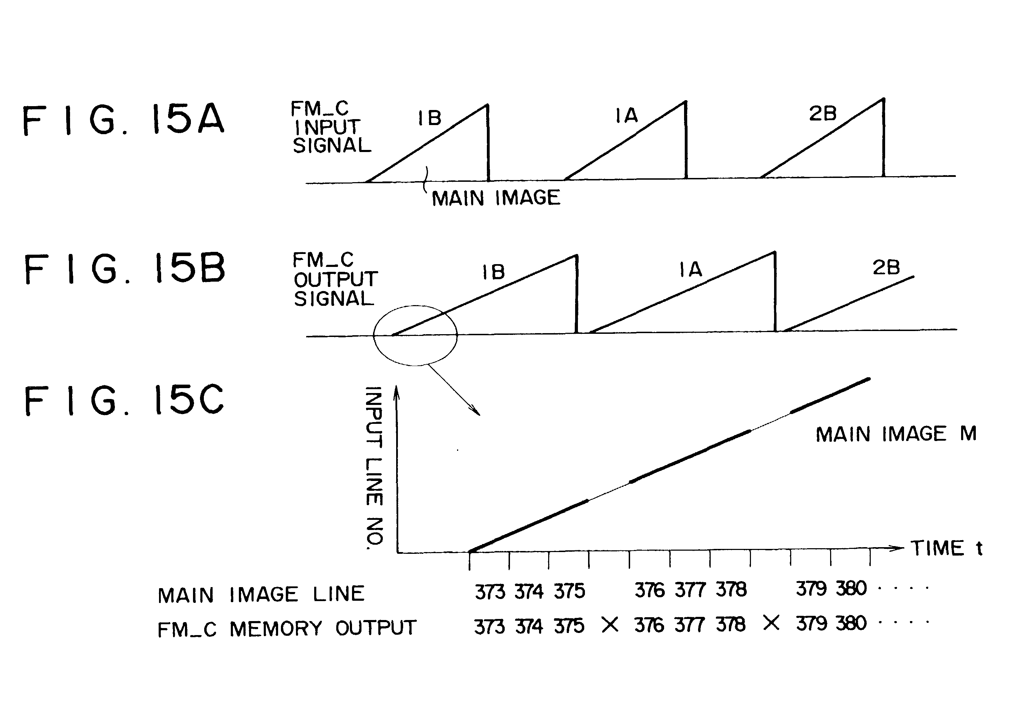

Fig. 15B indicates the image color signal in which the dummy signal is inserted in this way and outputted from FM_C 29. Fig. 15C indicates an enlarged view for showing a rising part of the output signal in Fig. 15B. In Fig. 15C, this dummy signal is expressed by "x".

The image signals in the A field and the B field under the film mode are made of images of the same timing and the image color image in the A field is assumed to be that of the B field. Accordingly, although the color signals in the A field and the B field in Fig. 15B are alternatively outputted, the color signals in the B field are outputted twice in a continuous manner and the raster interpolation using data of the B field can also be carried out at the raster interpolation of the A field.

As described above, during the brightness signal raster interpolation under the film mode, the image signals in the same A field and the same B field are inputted continuously in two fields to the vertical filter processing part 31, so that it is possible to perform the vertical filtering using concurrently the image brightness signals in the A field and the B field.

Then, a field memory controlling method under the camera mode will be described. Under the camera mode, the image signals in each of the A field and the B field are composed of images of different timings, so that the vertical filtering for the brightness signal and the vertical filtering for the color signal are different from those of the aforesaid film mode and carried out only with the signals in each of the A field and the B field, respectively. That is, in the case that the brightness signal and the color signal are processed with the vertical filtering of the A field, only the data in the A field is used and similarly for the vertical filtering for the B field, only the data in the B field is used. In order to realize this, only FM_B 28 and FM_C 29 are used for the vertical filtering for the brightness signal under the camera mode and each of the field memory outputs is not read out twice in a continuous manner as found in the film mode.

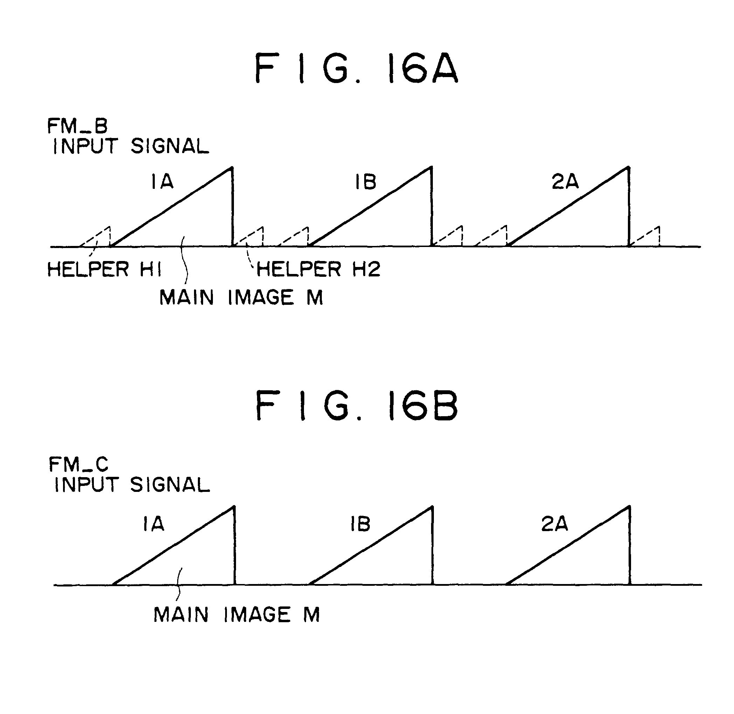

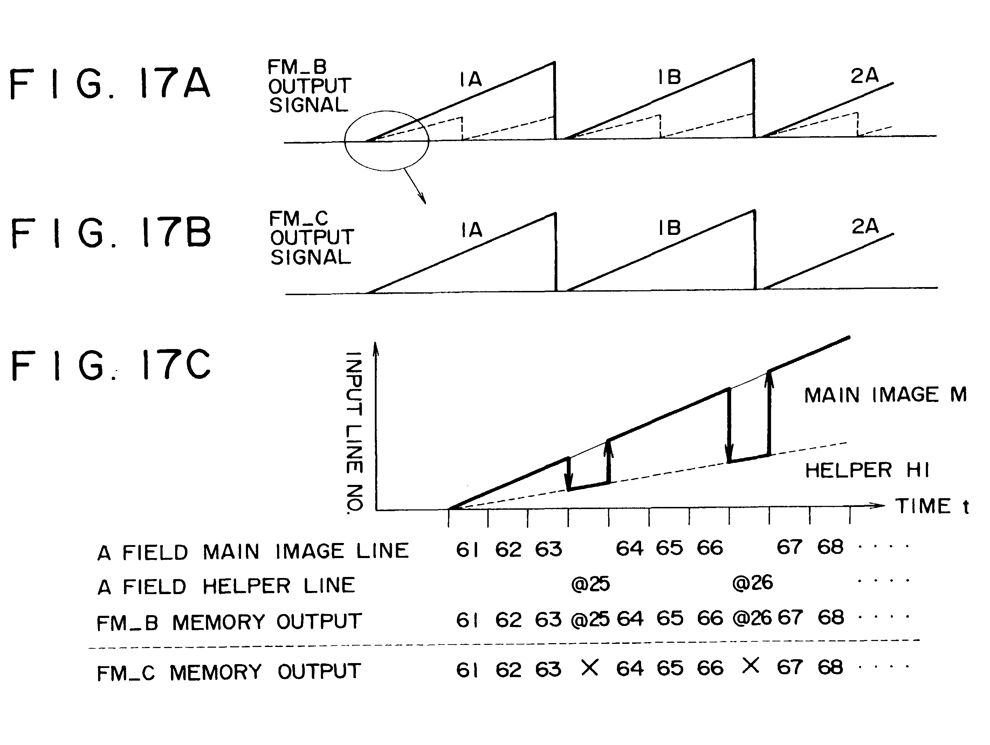

Fig. 16A indicates the image brightness signal to be inputted to FM_B 28 and Fig. 16B indicates an image color signal to be inputted to FM_C 29. In Fig. 17A is indicated a state in which the image brightness signal inputted to FM_B 28 is shuffled at FM_B 28. A relation between the ordinate and the abscissa in these Figs. 16 and 17 is the same as that of the aforesaid Figs. 13 and 14. The dotted line schematically indicates the shuffled helper signal. The image color signal inputted to FM_C 29 is not processed with shuffling in the same manner as that of the film mode. As indicated in Fig. 17A, the image brightness signal at the main image part is read out as shown for every line in respect to the field memory. Similarly, the helper signal is internally inserted as indicated by the dotted line in the figure for the shuffling and outputted.

In Fig. 17C is indicated an enlarged view for showing a rising part of the input signal indicated in Fig. 17A. In addition, since the raster interpolation is carried out only with the data in each of the fields at each of the field memories of FM_B 28 and FM_C 29, twice consecutive reading-out of the data is not carried out, but reading-out data for every field is performed.

As shown in Fig. 17C, the shuffling of FM B 28 outputs information at the main image part M of the lines 61, 62 and 63 in the A field, thereafter the processing returns to the helper signal H1 of the dotted line and outputs the 25th line helper signal. Subsequently, it outputs similarly and then the data is inputted to the brightness signal vertical filtering processing part 31. At the brightness signal vertical filtering processing part 31, processing (an image is smoothed) for keeping a continuity of the image damaged by the shuffling is performed and concurrently processing for supplementing a vertical resolution of the image signal is carried out and then it is outputted to the brightness signal output part as the normal interlace image signal.

As for the color signal, it is not necessary to perform a shuffling operation with the main image part as found in the brightness signal due to no presence of the helper signal in the same manner as that of the film mode, although it is additionally necessary to set a dummy signal at a rate of 1 line in respect to three lines of the main image signals during the reading-out operation from the memory in order to convert the main image part of 215 lines per field into 287 lines of 4/3 times of the former. Since this dummy signal is assumed to be at a zero level in an actual vertical filtering operation, any kinds of signals can be used. In Fig. 17C, this dummy signal is expressed as "x". In the foregoing description, although the shuffling is carried out when the field memory is read out, it may also be possible to perform the shuffling when the writing into the field memory is carried out.

Next, the vertical filtering will be described. Under the aforesaid film mode and the camera mode, their configurations are different from each other, although their basic composing elements are the same from each other. More practically, the composing elements are a group of line delay elements (LM) for delaying a signal by one line, a group of multipliers for multiplying in integer a signal obtained from each of the line delay elements, an adder/a subtracter for adding or subtracting a signal of result of multiplication, wherein the inputted data items are shifted one line at a time during one raster time, a predetermined calculation is carried out by a calculator for the signals at the same horizontal positions at different rasters over several lines obtained in this way, resulting in that the image signals having rasters interpolated can be obtained. In addition, as already indicated above, this vertical filtering is carried out for each of the brightness signal Y and the color signal C.

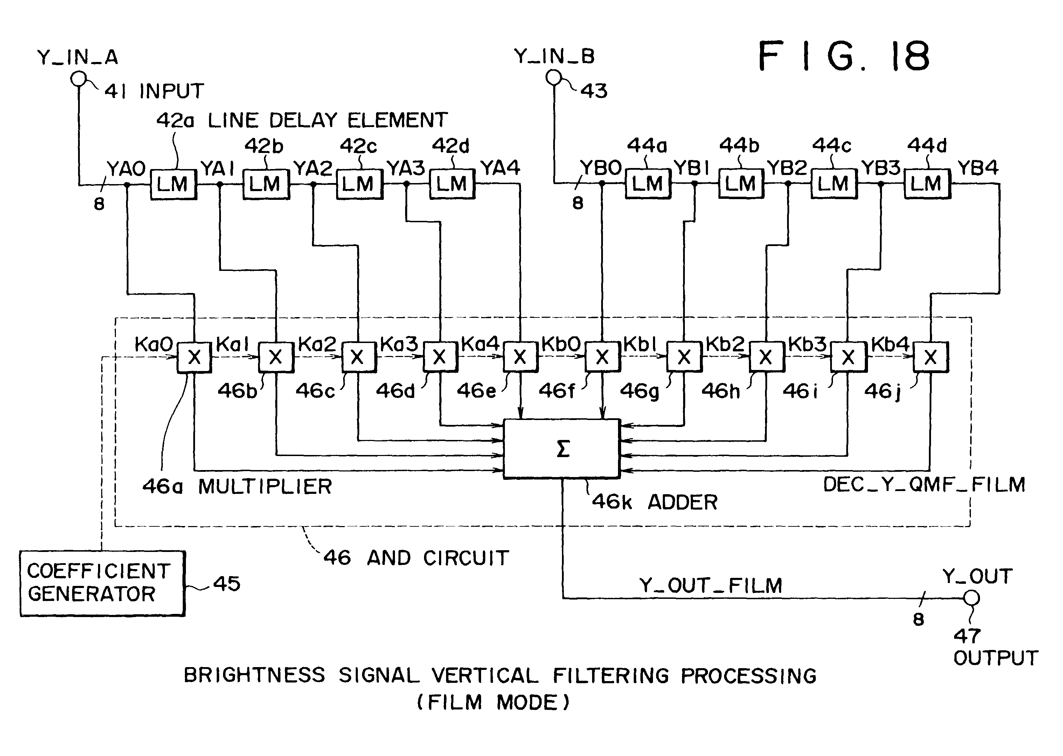

At first, the vertical filtering under the film mode will be described. Fig. 18 is a block diagram for showing a configuration of one example of a brightness signal vertical filtering processing part 31 under the film mode. Input part 41 is an input part for a brightness signal in the A field (Y_IN_A) in which the helper signal is shuffled at a rate of one line in three lines of main image signal in the A field, and input part 43 is similarly an input part of the B field brightness signal (Y_IN_B) in which the helper signal is shuffled at a rate of one line in three lines of main image signals of the B field.

LM 42A, 42B, 42c and 42d are 1 line delay elements, and signals YA0, YA1, YA2, YA3 and YA4 are the A field brightness signals of no delay, delayed by 1 line, 2 lines, 3 lines and 4 lines, respectively, for an input signal. Similarly, LM 44a, 44b, 44c and 44d are 1 line delay element, and signals YB0, YB1, YB2, YB3 and YB4 are B field brightness signals of no delay, delayed by 1 line, 2 lines, 3 lines and 4 lines, respectively, for an input signal.

These signals YA0, YA1, YA2, YA3 and YA4 as well as signals YB0, YB1, YB2, YB3 and YB4 are inputted to AND circuit 46. At the AND circuit 46, more practically, the following calculation is carried out for each of the signals YA0 to YA4 and the signals YB0 to YB4.

$$Y\_OUT\ FILM =$$

$$(ka0\ x\ YA0 + ka1\ x\ YA1 + ka2\ x\ YA2 + ka3\ x\ YA3$$

$$+ ka4\ x\ YA4 + kb0\ x\ YB0 + kb1\ x\ YB1 + kb2\ x\ YB2 + kb3\ x\ YB3$$

$$+ kb4\ x\ YB4)/64$$

where, ka0, ka1, ka2, ka3, ka4, kb0, kb1, kb2, kb3 and kb4 are positive or negative integer and they are supplied from the coefficient generator 45. In addition, a constant 64 is used for normalizing the coefficient. There are a total number of 8 patterns of combination of the coefficients for the input lines and the patterns are uniformly determined in reference to the input line No. The eight patterns are expressed by Phase 1 to Phase 8, wherein at the A field, the patterns are repeated for every 1 line like Phase 1 → Phase 3 → Phase 5 → Phase 7 and in turn at the B field, the patterns are repeated like Phase 2 → Phase 4 → Phase 6 → Phase 8, respectively. In this way, a raster interpolation signal (Y_OUT_FILM) is outputted to the output part (Y_OUT) 47.

The foregoing is the brightness signal vertical filtering under the film mode.

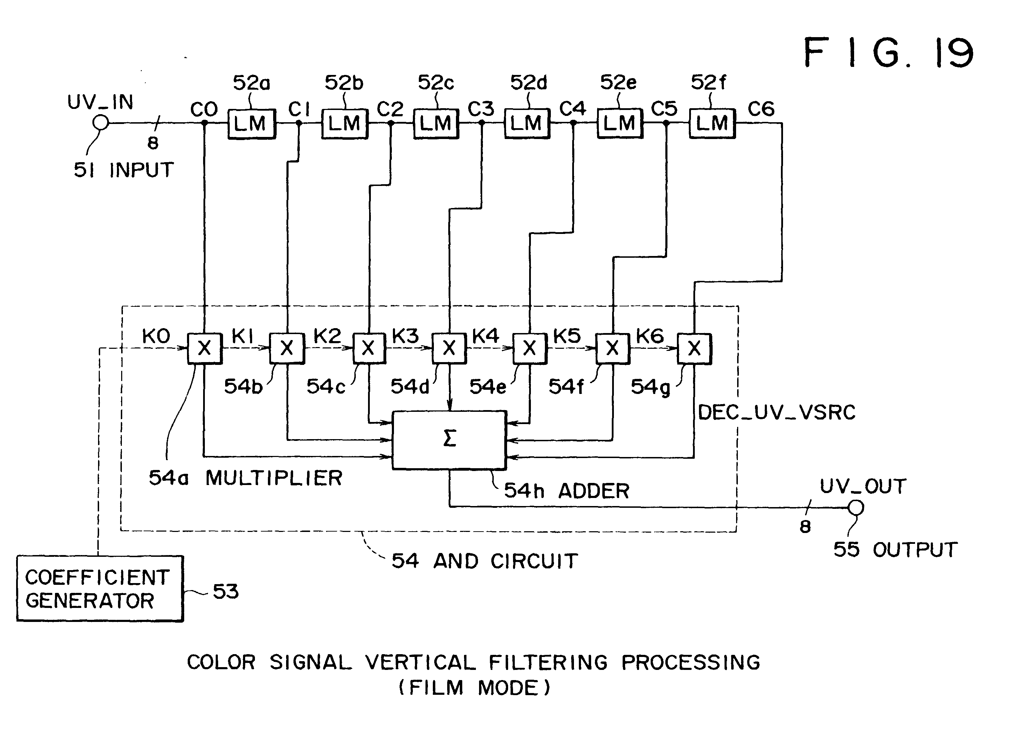

Fig. 19 is a block diagram for showing a configuration of one example of a color signal vertical filtering processing part 30 under the film mode. At the color signal vertical filtering processing part 30, the color signal having a dummy signal inserted therein is inputted to an input part 51. LM 52a, 52b, 52c, 52d, 52e and 52f are 1 line delay elements, and signals C0, C1, C2, C3, C4, C5 and C6 are color input signals of no delay, delayed by 1 line, 2 lines, 3 lines, 4 lines, 5 lines and 6 lines, respectively, for an input signal (UV_IN).

Such delay signals C0, C1, C2, C3, C4, C5 and C6 corresponding to each of delay amounts are inputted to the AND circuit 54. More practically, the AND circuit 54 performs the following calculation in respect to each of signals C0 to C6.

$$UV\_OUT =$$

$$(k0 \times C0 + k1 \times C1 + k2 \times C2 + k3 \times C3 + k4 \times C4$$

$$+ k5 \times C5 + k6 \times C6)/128$$

where, k0, k1, k2, k3, k4, k5 and k6 are positive or negative integers and supplied from the coefficient generator 53. There are a total number of 8 patterns of combination of the coefficients in reference to the input line and they are determined uniformly in reference to the input line No. The eight patterns are expressed by Phase 1 to Phase 8, wherein at the A field, the patterns are repeated for every 1 line like Phase 1 → Phase 2 → Phase 3 → Phase 4 and in turn at the B field, the patterns are repeated like Phase 5 → Phase 6 → Phase 7 → Phase 8, respectively. In this way, a raster interpolation signal (UV_OUT) can be obtained.

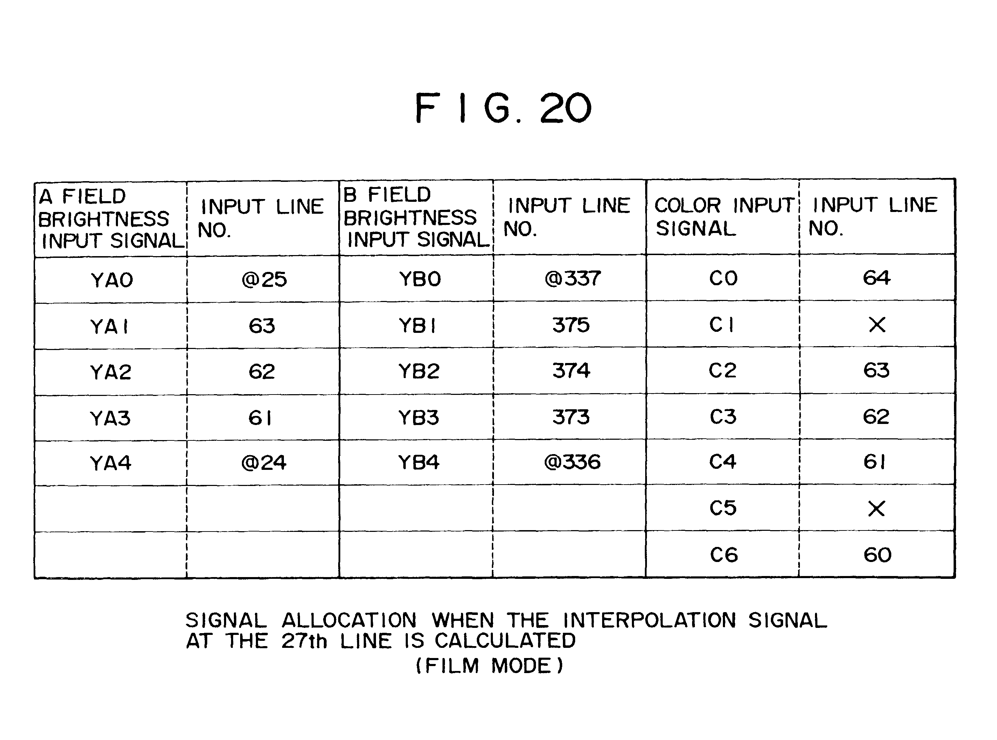

As one example, in Fig. 20 is indicated a case in which the 27th line of the film mode raster interpolation signal (this is a signal processed with vertical filtering and this is different from the 27th line of the input signal) is calculated. In Fig. 20 are indicated image line Nos. corresponding to the signals YA0 to YA4, YB0 to YB4, and C0 to C6. In this case, line starting at "@" in Fig. 20 is a helper signal and a part indicated by "x" shows a dummy signal inserted into a color signal, not applied for calculation of filter, so that any types of inputs may be applied.

According to Fig. 20, it is required that the 25th line (a helper signal) of the brightness signal is inputted to the brightness signal input part 41 of Fig. 18, the 337th line (a helper signal) of the brightness signal is inputted to the brightness signal input part 43 and the 64th line of the color signal is inputted to the color signal input part 51 of Fig. 19, respectively, in order to calculate the 27th line of the raster interpolation signal. As described above, since it is necessary that the line Nos. to be inputted to the brightness signal input parts 41, 43 and the color signal input part 51 under the film mode are different from each other, it is further necessary that a control signal for controlling FM_A 27, FM_B 28 and a control signal for controlling FM_C 29 are controlled separately.

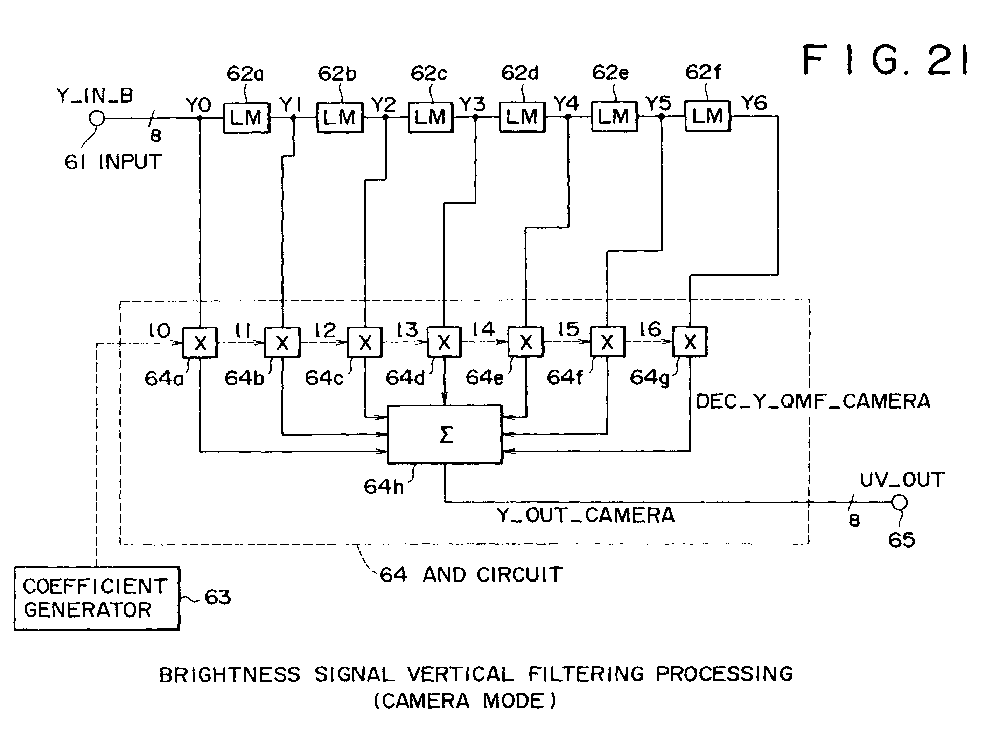

Next, the vertical filtering under the camera mode will be described. Fig. 21 is a block diagram for showing a configuration of one example of the brightness signal vertical filtering processing part 31 operated under the camera mode. Input part 61 is a brightness signal input part in which the helper signal is shuffled at a rate of one line in three lines of the main image part. LM 62a, 62b, 62c, 62d, 62e and 62f are 1 line delay elements, and signals Y0, Y1, Y2, Y3, Y4, Y5 and Y6 are brightness signals with no delay, delay of 1 line, delay of 2 lines, delay of 3 lines, delay of 4 lines, delay of 5 lines and delay of 6 lines, respectively, for the input signal (Y_IN_B).

These signals Y0, Y1, Y2, Y3, Y4, Y5 and Y6 are inputted to the AND circuit 64. More practically, at the AND circuit 64, the following calculation is carried out for each of the signals Y0 to Y6.

$$Y\ OUT\ CAMERA =$$

$$(\ell0 \times Y0 + \ell1 \times Y1 + \ell2 \times Y2 + \ell3 \times Y3 + \ell4 \times Y4$$

$$+ \ell5 \times Y5 + \ell6 \times Y6)/64$$

where, $\ell0$, $\ell1$, $\ell2$, $\ell3$, $\ell4$, $\ell5$ and $\ell6$ are positive or negative integers and supplied from the coefficient generator 63. In addition, the constant 64 is used for normalizing the coefficient. There are a total number of 8 patterns of combination of the coefficients in reference to the input line and they are determined uniformly in reference to the input line No. The eight patterns are expressed by Phase 1 to Phase 8, wherein at the A field, the patterns are repeated for every line like Phase 1 → Phase 2 → Phase 3 → Phase 4 and in turn at the B field, the patterns are repeated like Phase 5 → Phase 6 → Phase 7 → Phase 8, respectively. In this way, a raster interpolation signal (Y_OUT_CAMERA) can be obtained.

The foregoing is the vertical filtering for the brightness signal under the camera mode.

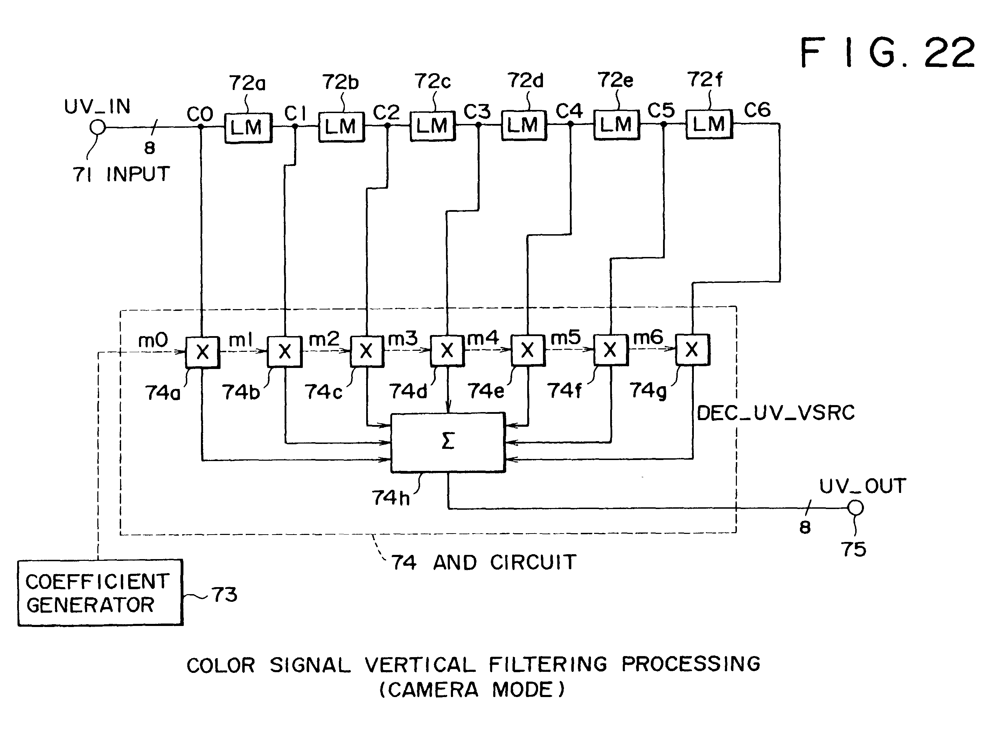

Fig. 22 is a block diagram for showing a configuration of one example of the color signal vertical filtering processing part 30 operated under the camera mode. At this color signal vertical filtering processing part 30, the color signal having the dummy signal inserted therein is inputted to the color signal inputting part 71. LM 72a, 72b, 72c, 72d, 72e and 72f are 1 line delay elements, and signals C0, C1, C2, C3, C4, C5 and C6 are color input signals with no delay, delay of 1 line, delay of 2 lines, delay of 3 lines, delay of 4 lines, delay of 5 lines and delay of 6 lines, respectively, for the input signal (UV_IN).

The delay signals C0, C1, C2, C3, C4, C5 and C6 corresponding to each of these delay amounts are inputted to the AND circuit 74. At the AND circuit 74, a following calculation is practically carried out for each of the signals C0 to C6.

$$UV\_OUT =$$

$$(m0 \times C0 + m1 \times C1 + m2 \times C2 + m3 \times C3 + m4 \times C4$$

$$+ m5 \times C5 + m6 \times C6)/128$$

where, the coefficients m0, m1, m2, m3, m4, m5 and m6 are either positive or negative integer and they are supplied from the coefficient generator 73. In addition, the constant 128 is used for normalizing a coefficient value. A total number of combination of the coefficients are 8 patterns in reference to the input line and they are uniformly determined in reference to the input line No. When the 8 patterns are expressed by Phase 1 to Phase 8, wherein at the A field, the patterns are repeated for every 1 line like Phase 1 → Phase 2 → Phase 3 → Phase 4 and in turn at the B field, the patterns are repeated like Phase 5 → Phase 6 → Phase 7 → Phase 8, respectively. In this way, a raster interpolation signal (UV_OUT) can be obtained.

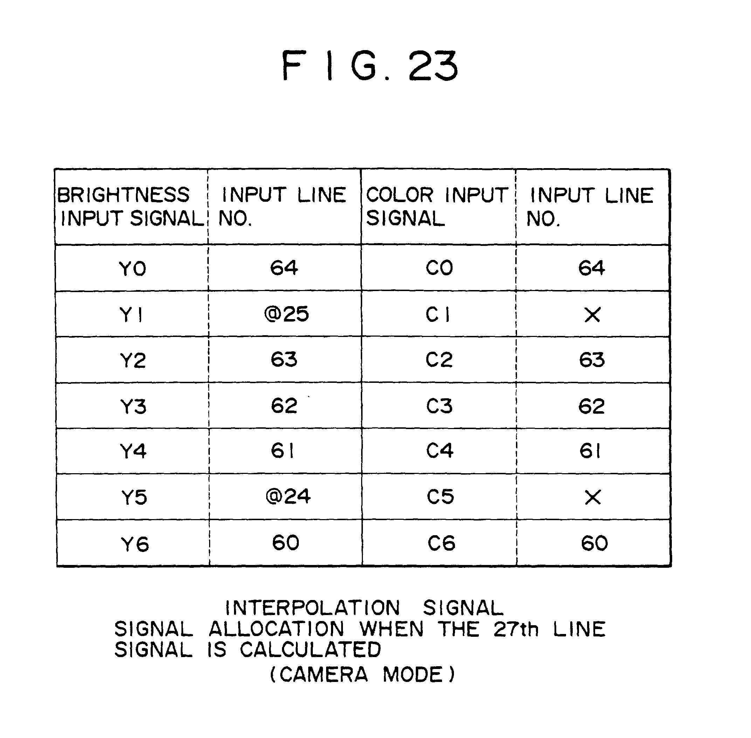

As one example, in Fig. 23 is shown a case in which the 27th line of the camera mode raster interpolation signal. In Fig. 23 are indicated the image line Nos. corresponding to brightness signals Y0 to Y6 and color signals C0 to C6 in Fig. 23. In this case, the line starting with a letter "@" in Fig. 23 is a helper signal, and a part indicated by a letter "x" is a dummy signal inserted into a color signal which is not applied for a filter calculation and any type of inputs can be applied.

According to Fig. 23, it is necessary that the signals having the same line No. are inputted to each of the brightness signal input part 61 in Fig. 21 and the color signal input part 71 in Fig. 22 in order to calculate the 27th line of the raster interpolation signal. As described above, differing from the case of the film mode, the line Nos. to be inputted to the brightness signal input part 61 and the color signal input part 71 under the camera mode are the same to each other, so that a control signal for controlling FM A 27 and FM_B 28 and a control signal for controlling FM_C 29 can be applied in common from each other.

As described above, input signal line Nos. at the color signal vertical filtering processing part and the brightness signal vertical filtering processing part under the film mode in the prior art were different from each other during the raster interpolation, so that there was a problem that an individual control signal generating circuit was required for a color signal and a brightness signal, respectively, resulting in that a control system for the field memory became complex.

It is assumed that the control system for the field memory is made common with the color signal and the brightness signal. As shown in Fig. 20, it is normally applied that the input line No. of the brightness signal and the input line No. of the color signal are shifted by one line at the input part of the vertical filter under the film mode. However, in the case that the control system is made common for the signals, same line No. is produced with a result that the vertically filtered brightness signal and color signal are displaced by one line.

The present invention is invented in view of the aforesaid circumstances, wherein the memory control signal can be made common for the brightness signal and the color signal, respectively, and even in that case, an increase in the cost of the device is prevented.

Although the present invention relates to a general characteristic of an image signal processing device for performing raster interpolation with a vertical reinforcing signal, a television receiver of PAL plus system which is now being faced to its practical application stage will be described in this specification mainly as one example of the image signal processing device.

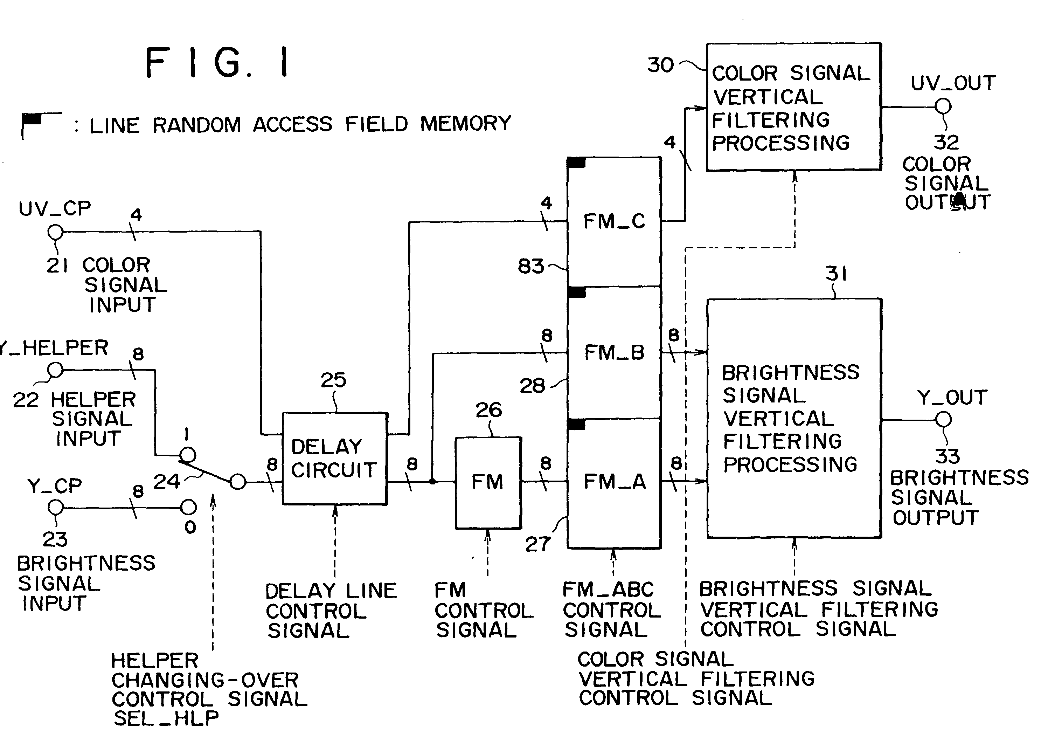

Fig. 1 is a block diagram for showing a configuration of one preferred embodiment of the raster interpolation device and a raster interpolation processing part in a television receiver of the present invention. In this preferred embodiment, a line random access field memory 83 is utilized in a memory for storing a color signal differing from the case of the prior art raster interpolation processing part described above in reference to Fig. 11.

In addition, in this preferred embodiment, a control signal for a field memory (FM_C) 83 used for raster interpolation for the color signal and control signals for the field memory (FM_A) 27 and field memory (FM_B) 28 applied for the raster interpolation for the brightness signal are made common from each other. Accordingly, even in the case of the color signal, shuffling is applied to it in the same manner as that of the brightness signal.

Since other configurations and operations are basically the same as those described above in reference to Fig. 11, their description will be eliminated.

The data writing control signal and the data reading-out control signal for the brightness signal field memories 27, 28 and the color signal field memory 83 are common from each other under the camera mode in the prior art, so that they will be not described here. Accordingly, the case in which the control signal for the brightness signal field memories 27, 28 and the color signal field memory 83 are made common from each other will be described below only in reference to the film mode.

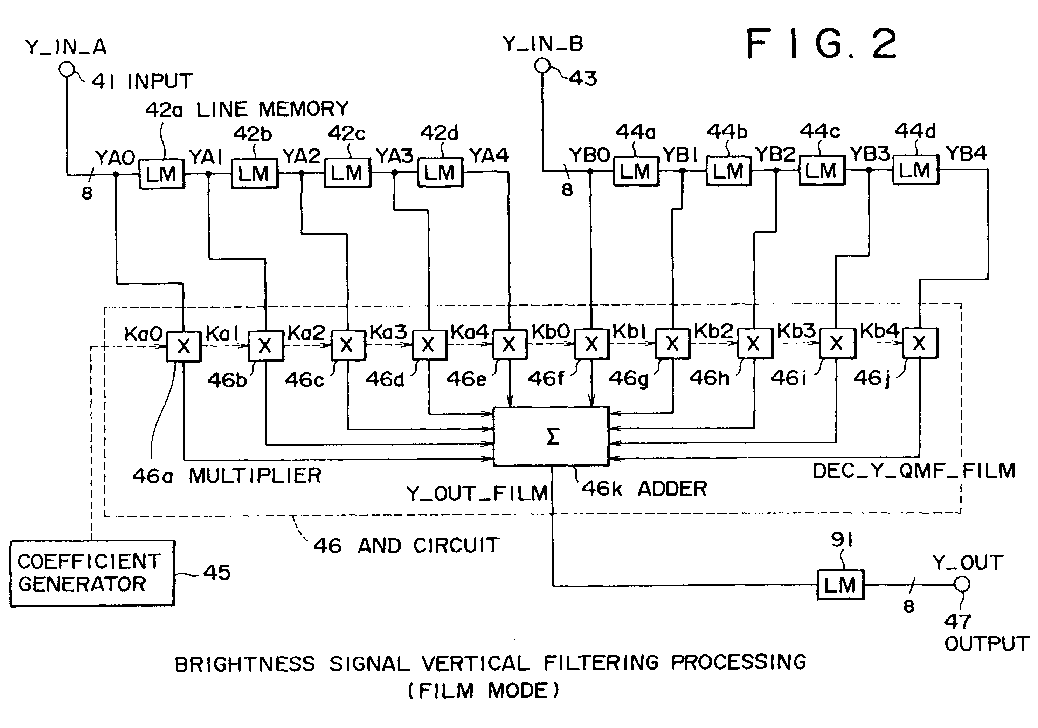

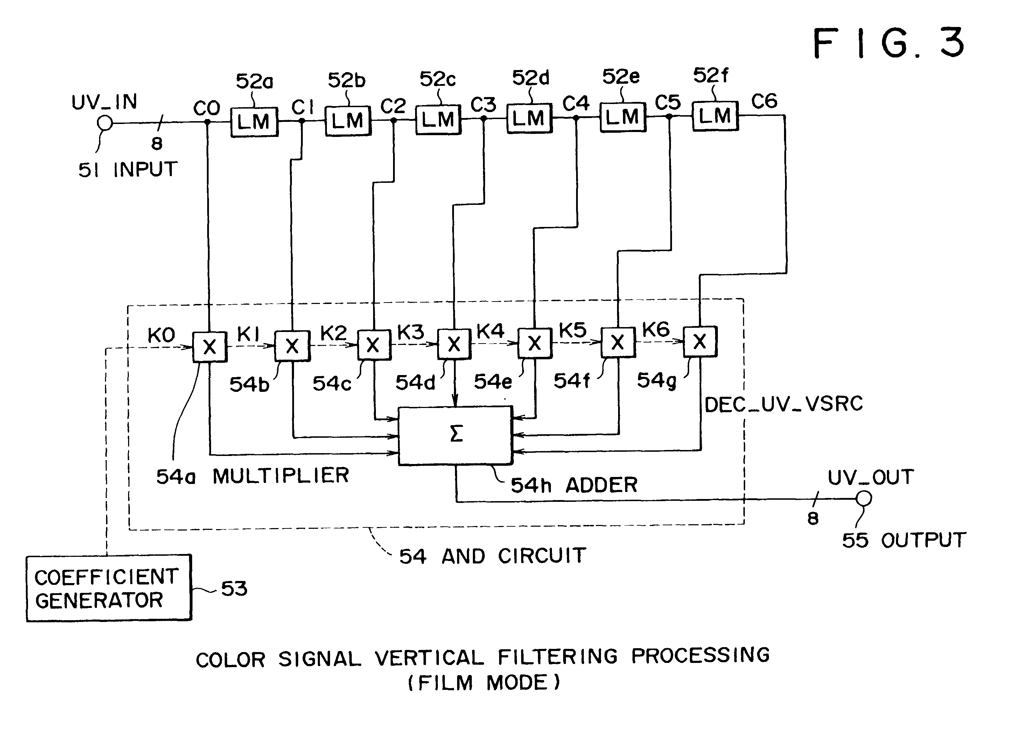

As shown in Fig. 1, all of each of the control signals for the field memories 27, 28 and the field memory 83 are made common to each other as a control signal (FM_ABC). In this case, the brightness signal vertical filtering processing part 31 has a configuration shown in Fig. 2. In addition, the color signal vertical filtering processing part 30 has a configuration shown in Fig. 3. In Fig. 2, each of the line delay elements (LM) 42a to 42d is made such that a signal (Y_IN_A) inputted from the input part 41 is outputted with a delay of one line. Similarly, each of the line delay elements 44a to 44d is outputted with a signal (Y_IN_B) inputted through the input part 43 being delayed by one line.

A coefficient generator 45 generates coefficients ka0 to ka4 and kb0 to kb4 and supplies them to the multipliers 46a to 46j constituting the AND circuit 46. Each of the multipliers 46a to 46j multiplies signals inputted thereto and a coefficient supplied by the coefficient generator 45 from each other and supply them to the adder 46k. The adder 46k adds the results of multiplication supplied from the multipliers 46a to 46j and supplies them to the line delay element 91. The line delay element 91 outputs a signal supplied by the adder 46k through the output part 47 with a delay of one line.

Accordingly, a predetermined calculation is carried out for a signal of the field memory 27 inputted from the input part 41 and a signal of the field memory 28 inputted from the input part 43, wherein a raster-interpolated and vertically filtered brightness signal (Y_OUT_FILM) is delayed at the line delay element 91 only with one line and then this signal is outputted.

In the case that the control signals for the brightness signal field memories 27, 28 and the color signal field memory 83 are made common from each other in this way, the raster-interpolated brightness signal must be further delayed only by one line at the brightness signal vertical filtering processing part 31 in order to cause the number of stages of delay of it to be coincided with that of the color signal. That is, in the case that the controls for the field memories are made common from each other in order to simplify the control over the field memory, it is necessary to delay the output signal (Y_OUT_FILM) by one line.

Accordingly, as shown in Fig. 2, it is necessary to arrange in surplus the line delay element 91 of one line as compared with that of the prior art shown in Fig. 18, although the control circuit for the field memories 27, 28 and 83 can be simplified as compared with that of the prior art shown in Fig. 18.

In turn, a color signal vertical filtering processing part 30 shown in Fig. 3 is similar to those of the prior art shown in Fig. 19 in view of its configuration and operation. That is, the line delay elements (LM) 52a to 52f are operated to output an inputted signal while being delayed by one line. The coefficient generator 53 supplies predetermined coefficients k0 to k6 to the multipliers 54a to 54g constituting the AND circuit 54. The multipliers 54a to 54g multiply the signals supplied from the input part 51 and the line delay elements 52a to 52f with a coefficient supplied by the coefficient generator 53 and then supply it to the adder 54h. The adder 54h adds the signals supplied from the multipliers 54a to 54g and outputs the raster-interpolated and vertically filtered color signals through the output part 55.

Accordingly, the color signals of the field memory 83 supplied through the input part 51 are processed by a predetermined calculation at the AND circuit 54, the vertical filtering is carried out, thereafter they are outputted.

In this case, in view of the fact that there is a line (a line to which a dummy signal is inputted) actually not used in the color signal vertical filtering in the color signal line delay element of the color signal vertical filtering processing part 30, it is possible to delete the delay line 91 of one line at the brightness signal vertical filtering processing part 31 shown in Fig. 2. This operation will be described as follows.

As for the color signal field memory 83, a control is carried out such that a dummy signal not used in the vertical filtering is inserted at a rate of one line per three lines in the main image under the shuffling operation in order to cause it to be the same as that of brightness signal field memories 27, 28. Accordingly, at the color signal vertical filtering processing part 30, a line delay element (a vacant line delay element) not used in the actual filtering calculation, although required in principle in view of the configuration of the line delay element, can be used as the former brightness signal delay means 91. This vacant line delay element is uniformly determined by the line No. of the inputted signal, so that it is necessary to make a proper selection of an applicable line delay element.

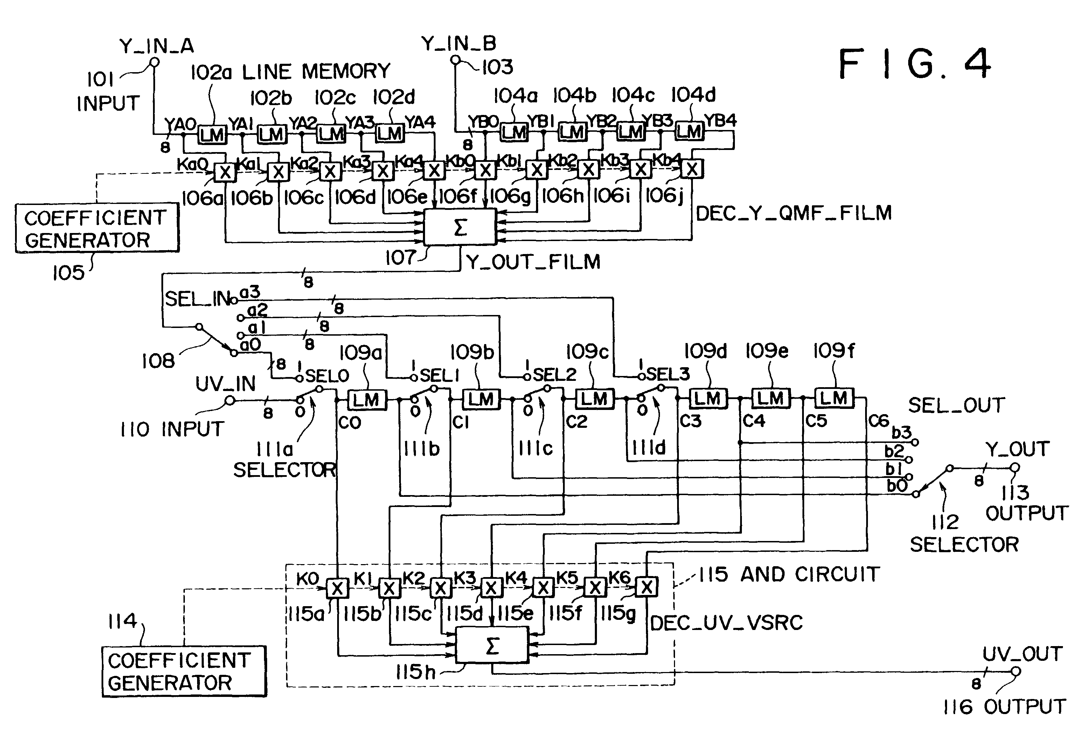

In Fig. 4 is shown an example of configuration of the color signal vertical filtering processing part 30 and the brightness signal vertical filtering processing part 31. In Fig. 4, the line delay elements (LM) 102a, 102b, 102c and 102d are made such that input signals from the input part 101 are outputted in sequence with a delay of one line by one line. Similarly, the line delay elements 104a, 104b, 104c and 104d are made such that input signals from the input part 103 are outputted in sequence with a delay of one line by one line.

A coefficient generator 105 generates coefficients ka0 to ka4 and kb0 to kb4 and supplies them to each of the multipliers 106a to 106j. The multipliers 106a to 106j multiply signals inputted from the input parts 101 and LM 102a to 102d and the input parts 103, LM 104a to 104d supplied there with each of the coefficients supplied from the coefficient generator 105 and supply them to the adder 107. The adder 107 adds the results of multiplication supplied from the multipliers 106a to 106j and outputs them.

A selector 108 outputs a signal supplied by the adder 107 from either one of the terminals a0 to a3. A selector 111a inputs a signal from the selector 108 when it is connected to the terminal 1, inputs a signal from the input part 110 when it is connected to the terminal 0 and supplies it to LM 109a and the multiplier 115a. LM 109a inputs a signal from the selector 111a and outputs it to the selector 111b and the selector 112 with one line being delayed. The selector 111b inputs a signal from the selector 108 when it is connected to the terminal 1, inputs a signal from LM 109 and supplies it to LM 109b and the multiplier 115b.

LM 109b inputs a signal from the selector 111b and outputs it to the selector 111c and the selector 112 with one line being delayed. The selector 111c inputs a signal from the selector 108 when it is connected to the terminal 1, inputs a signal from LM 109 when it is connected to the terminal 0, and supplies it to LM 109c and the multiplier 115c. LM 109c inputs a signal from the selector 111c, and outputs it to the selector 111d and the selector 112 after being delayed by one line. The selector 111d inputs a signal from the selector 108 when it is connected to the terminal 1, inputs a signal from LM 109c when it is connected to the terminal 0 and supplies it to LM 109d and the multiplier 115d.

LM 109d inputs a signal from the selector 111d and supplies it to LM 109e, selector 112 and multiplier 115e after being delayed by one line. LM 109e inputs a signal from LM 109d and supplies it to LM 109f and the multiplier 115f after being delayed by one line. In addition, LM 109f inputs a signal from LM 109e and supplies it to the multiplier 115g after being delayed by one line.

The multipliers 115a to 115g multiply signals inputted from the selectors 111a, selectors 111b, 111c, 111d, LM 109d, LM 109e, LM 109f, respectively, with a coefficient supplied from the coefficient generator 114 and then supply it to the adder 115h. The adder 115h adds the signals supplied from the multipliers 115a to 115g and outputs them from an output part 116.

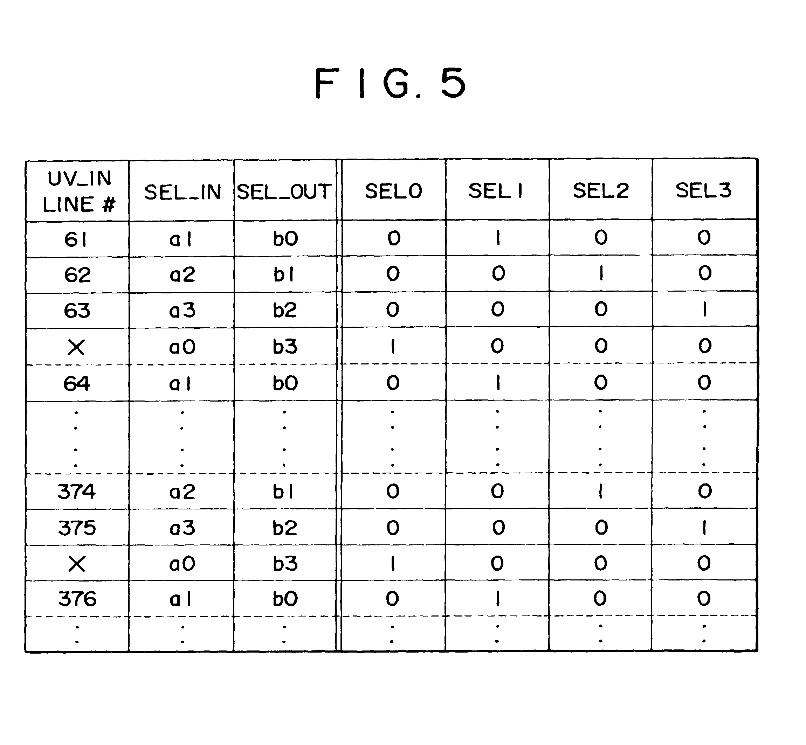

Then, referring now to Figs. 4 and 5 together, their principle and operation will be described. Fig. 5 shows a color signal line No. inputted to an input part 110 of the color signal vertical filtering processing part 30 shown in Fig. 4 and a setting of each of a signal changing-over unit (a selector) 108, selector 112, selectors 111a, 111b, 111c and 111d, respectively. A letter "x" in Fig. 5 indicates a line which is not used in the color signal vertical filtering and a line delay element in which data corresponding to this line should be stored is used for delaying of the brightness signal.

For example, in the case that the line No. of the color input signal (UV_IN) is the 61st line, a signal before the 61st line is a dummy signal, so that the vacant line delay element in the color signal line delay element becomes LM 109b. Accordingly, at this time, at first the selector 108 is connected to the terminal a1. Then, the selector 111b is set to the terminal 1 and each of the selectors 111a, 111c and 111d is set to the terminal 0, respectively. With such an arrangement as above, the vertically filtered brightness signal (Y_OUT_FILM) is inputted in sequence to LM 109b.

Then, as the input line No. becomes the 62nd line, the vacant line delay element is displaced by one line in a rightward direction to become LM 109c. In this case, the selector 108 is connected to the terminal a2, the selector 111c is set to 1 side and other selectors 109a, 109b and 109d are set to 0 side. A signal outputted from LM 109b at this time is a signal in which a brightness signal inputted when the 61st line of the color signal is inputted is vertically filtered, the terminal bl is selected at the selector 112, thereby it can be outputted from the output part 113. Accordingly, the filtered brightness signal can be delayed by one line.

Only one pattern has been described in the foregoing, it is possible that a result of vertical filtering of the brightness signal is delayed by one line in respect to a result of vertical filtering of the color signal. As described above, it is possible to delete the line delay element 91 of the brightness signal shown in Fig. 2 by applying the vacant line delay element to be used in the color signal filtering.

At this time, the AND circuit 115 of the prior art color signal vertical filtering can perform calculation as found in the prior art by changing-over each of the selectors for every line as shown in Fig. 5. Although the configuration shown in Fig. 4 is seemed to be complex at a glance, this can be realized easily by applying a digital signal processor (DSP). In this case, a working RAM of DSP is used in place of the line memory LM. In addition, in the case that DSP is used, for example, processing for one line can be carried out in 8 clocks and quite fast processing can be carried out.

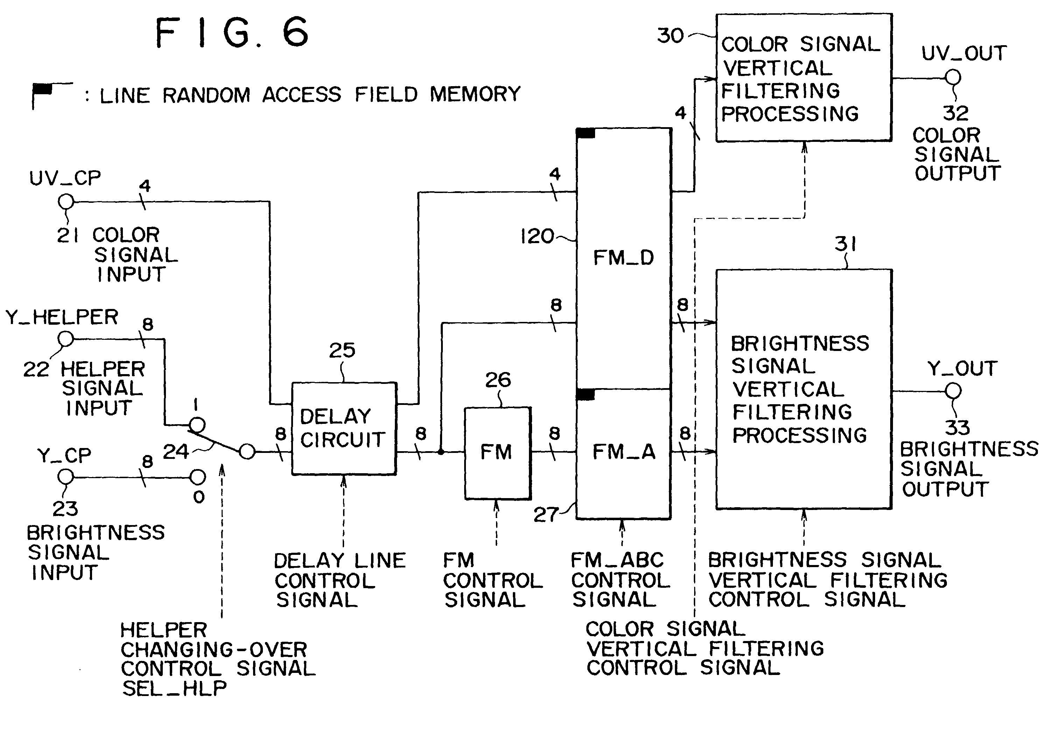

Fig. 6 is a block diagram for showing a configuration of another preferred embodiment of the raster interpolation processing part in the television receiver of PAL plus broadcasting system in which the raster interpolation device and the vertical reinforcing signal processing device of the present invention are applied. This preferred embodiment is constructed such that the field memories 28 and 83 in the preferred embodiment shown in Fig. 1 are formed of one field memory 120. Since the signals supplied to the field memories 28 and 83 are common signals in this case, the field memories 28 and 83 are replaced with a standard field memory 120 capable of inputting or outputting 12 bits.

Since other configurations and operations are basically the same as those shown in the preferred embodiment shown in Fig. 1, their description is eliminated and it becomes possible to reduce the number of component parts by replacing the field memories 28, 83 with one field memory 120 and further to reduce its cost.

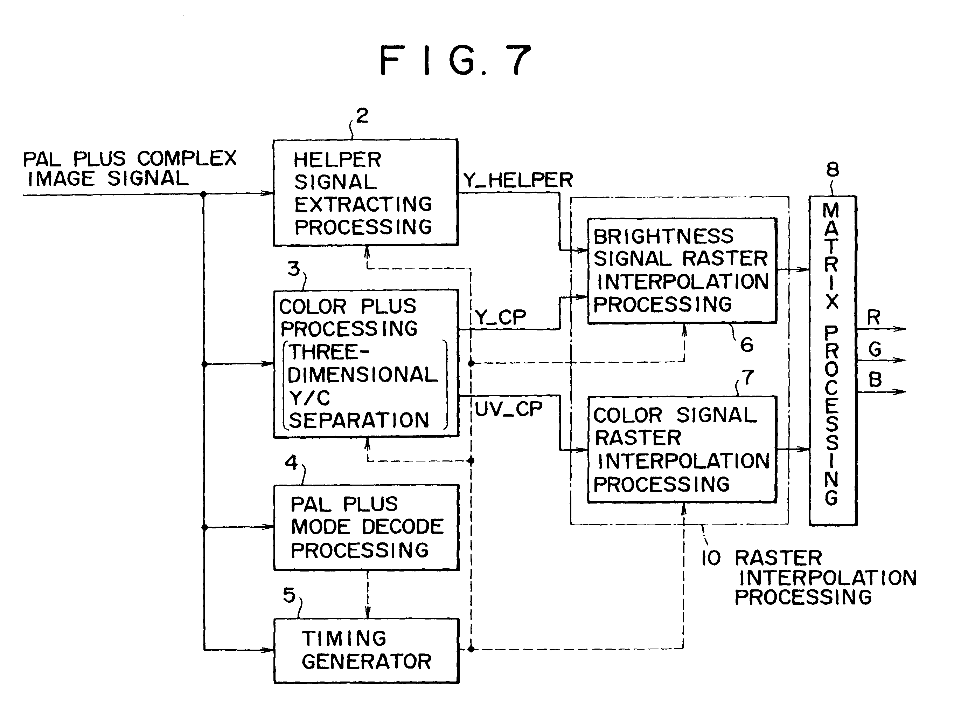

Fig. 7 is a block diagram for showing a configuration of one preferred embodiment of a decoder for PAL plus system in which the decoder of the present invention is applied. Configuration and operation of this preferred embodiment are different from those shown in the aforesaid Fig. 9, and the inner configuration of the raster interpolation processing part 10 is formed as one shown in Fig. 1 or Fig. 6. In addition, the configuration of the vertical filtering processing part under the film mode is also like the configuration shown in Fig. 4.

Other configurations and operations are basically the same as those of the aforesaid prior art example described in reference to Fig. 9, their description is eliminated.

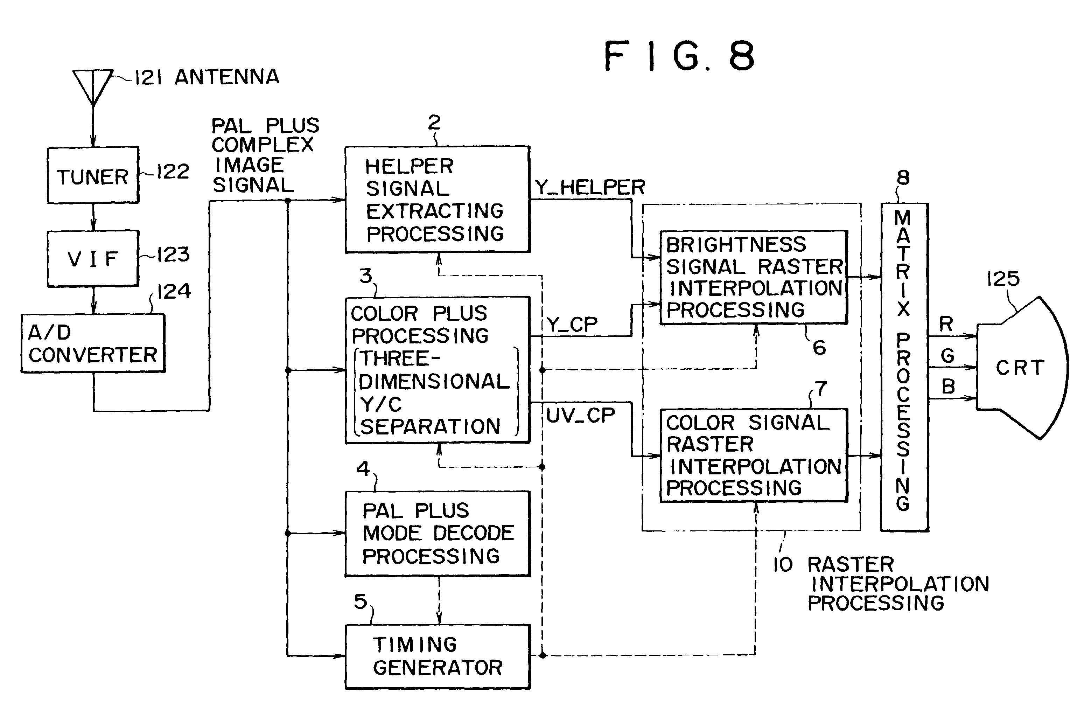

Fig. 8 is a block diagram for showing a configuration of one preferred embodiment of the receiver for PAL plus to which the television receiver of the present invention is applied. A signal corresponding to the broadcasted wave received through an antenna 121 is supplied to a tuner 122. The tuner 122 selects a signal corresponding to a predetermined channel from signals supplied by the antenna 121 and supplies it to the VIF 123. The VIF 123 converts the signal corresponding to the predetermined channel inputted through the tuner 122 into a signal of intermediate frequency and supplies it to an A/D converter 124. After converting the signal supplied from the VIF 123 into a digital signal, the A/D converter 124 supplies it to a helper signal extracting processing part 2, a color plus processing part (a three dimensional Y/C separator) 3, a PAL plus mode decode processing part 4 and a timing generator 5.

The helper signal extracting processing part 2 extracts a helper signal from the inputted PAL plus complex image signal and supplies it to the brightness signal raster interpolation processing part 6. The color plus processing part 3 separates the inputted PAL plus complex image signal into the Y signal and the C signal, supplies the Y signal to the brightness raster interpolation processing part 6 and supplies the C signal to the color signal raster interpolation processing part 7. The PAL plus mode decode processing part 4 decodes a discrimination control signal from the inputted PAL plus complex image signal so as to perform mode discrimination. In addition, these pieces of information are supplied to the timing generator 5. The timing generator 5 may generate various control signals in response to information supplied from the mode decode processing part 4 and supply them to each of the parts.

The raster interpolation processing part 10 is constructed as shown in Fig. 1 or Fig. 6, its configuration and operation are basically the same as those described above in reference to Figs. 1 and 6, so that their detailed description is eliminated, wherein a vertical filtering is carried out for the inputted brightness signal and color signal and they are supplied to the matrix processing part 8. The matrix processing part 8 converts the inputted brightness signal and color signal into RGB signals and supplies them to a CRT 125. As a result, at the CRT 125 are displayed images corresponding to the RGB signals supplied by the matrix processing part 8.

As described above, the present invention may resolve the problem in which a configuration of the control signal generating circuit becomes complicated under the film mode. For example, the control can be simplified under a common control for the applied field memories in the television receiver of PAL plus system. With such an arrangement as above, it is possible that the brightness signal field memory and the color signal field memory which can be accessed in random manner are commonly shared. Accordingly, it is possible to reduce the number of applied field memories by applying the field memory of multi-bit input. As shown in Fig. 1, in the case that the field memory 28 is of 8-bit input and output type and the field memory 83 is of 4-bit input and output type, for example, it is possible to reduce the number of field memories only by one by replacing the two field memories 28, 83 with the field memory of 12-bit input output type.

In addition, in the case that the controls for each of the field memories are made common to each other in this way, it becomes necessary to provide one line delay element (LM) for delaying the raster-interpolated brightness signal by one line under the film mode after its vertical filtering, although one line delay processing can be realized without arranging a new line delay element on the circuit by delaying the brightness signal with application of the line delay element, which is required in principle, but not used, of the required color signal line delay elements as described above in reference to Fig. 4. That is, this can be realized by arranging the signal selector at the input/output part of the color signal line delay element and properly changing-over it for every line.

As described above, it is possible to reduce the number of line delay elements by one and reduce a cost of the device by devising the use of the color signal line delay element.

The aforesaid preferred embodiment can be applied to the raster interpolation for not only a PAL plus signal but also a normal PAL signal or an NTSC signal or an EDTV signal by setting the vertical reinforcing signal to zero.

In addition, although the field memories 28 and 83 are made common in the aforesaid preferred embodiment, it is also possible to make the field memories 27, 28 and 83 common from each other and to replace them with one field memory.

In addition, the present invention can be applied to other electronic equipment such as a video tape recorder and the like, for example.

In addition, the practical numerical values applied in each of the aforesaid preferred embodiments are merely one example, but not limited to these values.

In the raster interpolation device of the present invention, the same control signals are supplied by the control means to the first memory means for storing the brightness signal and the brightness reinforcing signal and the second memory means for storing the color signal. The raster interpolation for the brightness signal is carried out by the first interpolation means in response to the brightness signal and the brightness reinforcing signal stored in the first memory means, and the color signal raster interpolation is carried out by the second interpolation means in response to the color signal read out in accordance with the control signal and stored in the second memory means. Accordingly, the control signals for reading out the brightness signal and the color signal can be made in common. With such an arrangement as above, a cost of the device can be reduced.

In addition, in the television receiver of the present invention, the brightness signal, the color signal and the brightness reinforcing signal are separated from the signal received by the receiving means, the brightness signal and the brightness reinforcing signal are stored in the first memory means and the color signal is stored in the second memory means. In addition, the discrimination signal is detected from the received signal so as to discriminate the mode information of the image signal. The same control signals are supplied to the first memory means and the second memory means in response to the mode information discriminated by the discrimination means, thereby the writing and the reading-out operations of the first and the second memory means are controlled. Accordingly, it is possible to make the control signals for reading out the brightness signal and the color signal in common. With such an arrangement as above, it is possible to reduce a cost of the television receiver.

**Claims**

1. A raster interpolation device (10) for receiving an image signal of a main image part which is transmitted in a form of letter box and a broadcasting signal with a brightness reinforcing signal (Y_HELPER) for reinforcing a vertical resolution of a brightness signal (Y_CP) of the image signal of the main image part by applying an effective line except a part having the image signal of the main image part is received and the received signal is processed, comprising:

   first memory means (27, 28) for storing the received brightness signal (Y_CP) and brightness reinforcing signal (Y_HELPER);
   second memory means (83) for storing a received color signal (UV_CP);
   control means for controlling a writing operation and a reading-out operation of said first and second memory means (27, 28, 83) by supplying the same control signal (FM_ABC) to said first memory means (27, 28) and said second memory means (83);
   first interpolation means (31) for performing raster interpolation in response to a brightness signal (Y_CP) read out of said first memory means (27, 28) in accordance with said control signal (FM_ABC) and said brightness reinforcing signal (Y_HELPER);
   first one line delay means (91) for delaying the raster-interpolated brightness signal (Y_OUT_FILM) by one line under a film mode; and
   second interpolation means (30) for performing a raster interpolation in response to a color signal (UV_CP) read out of said second memory means (83) in accordance with said control signal (FM_ABC).

2. A raster interpolation device (10) as set forth in claim 1, **characterized in that** there is provided reinforcing signal demodulating means (2) for demodulating a signal in said received signals transmitted through said main image part and for getting said brightness reinforcing signal (Y_HELPER), and said demodulated brightness reinforcing signal (Y_HELPER) is stored in said first memory means (27, 28).

3. A raster interpolation device (10) as set forth in claim 2, **characterized in that** said control means controls said first memory means (27, 28) in such a manner that it is shuffled when said brightness signal (Y_CP) and brightness reinforcing signal (Y_HELPER) are read out of said first memory means (27, 28).

4. A raster interpolation device (10) as set forth in claim 2, **characterized in that** said control means controls said first memory means (27, 28) in such a manner that it is shuffled when said brightness signal (Y_CP) and brightness reinforcing signal (Y_HELPER) are written into said first memory means (27, 28).

5. A raster interpolation device (10) as set forth in claim 2, **characterized in that** said control means controls said second memory means (83) in such a manner that dummy data is outputted every predetermined raster when said color signal (UV_CP) is read out of said second memory means (83).

6. A raster interpolation device (10) as set forth in claim 2, **characterized in that** said control means controls said second memory means (83) in such a manner that dummy data is written every predetermined raster when said color signal (UV_CP) is written into said second memory means (83).

7. A raster interpolation device (10) as set forth in claim 1, **characterized in that**
   said first interpolation means (31) is comprised of:

   first delay means (42a...42d, 44a...44d; 102a...102d, 104a...104d) for delaying said brightness signal (Y_CP) and brightness reinforcing signal (Y_HELPER) read out said first memory means (27, 28) and outputting a plurality of raster signals;

first multiplier means (46a...46j; 106a...106j) for multiplying each of a plurality of raster signals outputted from said delay means (42a...42d, 44a...44d; 102a...102d, 104a...104d) with a predetermined coefficient (Ka0... Ka4, Kb0...Kb4); and

first adding means (46k; 107) for adding a plurality of raster signals outputted from said multiplier means (46a. . .46j; 106a...106j);

said second interpolation means (30) is comprised of:

second delay means (52a...52f; 109a...109f) for delaying said color signal (UV_CP) read out of said second memory means (83) and outputting a plurality of raster signals;

second multiplier means (54a...54g; 115a...115g) for multiplying a predetermined coefficient (K0...K6) to each of a plurality of raster signals outputted from said delay means (52a...52f; 109a...109f); and

second adding means (54h; 115h) for adding a plurality of raster signals outputted from said multiplier means (54a...54g; 115a...115g).

8. A raster interpolation device (10) as set forth in claim 7, **characterized in that** at least a part (109a...109d) of said second delay means (109a...109f) is used as said first one line delay means and in that there is provided means (108, 111a...111d, 112) for supplying an output signal (Y_OUT_FILM) from said first adding means (107) to said second delay means (109a...109d) and taking it out from said second delay means (109a...109d) after a predetermined period is delayed.

9. A raster interpolation device as set forth in claim 8, **characterized in that** there is provided decode means (4) for detecting a discriminating signal of said received signals transmitted through a predetermined line and decoding the discriminating signal, an output signal (Y_OUT_FILM) from said first adding means (107) is supplied to said second delay means (109a...109d) when the transmitted image signal is in the film mode as a result of decode of the discriminating signal at said decode means (4).

10. A raster interpolation device as set forth in claim 8, **characterized in that** said first interpolation means (31) and second interpolation means (30) are composed of a digital signal processor.

11. A television receiver for receiving an image signal of a main image part which is transmitted in a form of letter box and a broadcasting signal with a brightness reinforcing signal (Y_HELPER) for reinforcing a vertical resolution of a brightness signal (Y_CP) of the image signal of the main image part by applying an effective line except a part having the image signal of the main image part is received, comprising:

receiving means for receiving said broadcasting signal;

separating means (3, 2) for separating a brightness signal (Y_CP), a color signal (UV_CP) and a brightness reinforcing signal (Y_HELPER) from the received signal;

discriminating means (4) for sensing a discriminating signal from the received signal and discriminating mode information of an image signal;

first memory means (27, 28) for storing the received brightness signal (Y_CP) and brightness reinforcing signal (Y_HELPER);

second memory means (83) for storing a received color signal (UV_CP);

control means for controlling a writing operation and a reading-out operation of said first and second memory means by supplying the same control signal (FM_ABC) to said first memory means (27, 28) and said second memory means (83) in response to the mode information discriminated by said discriminating means (4);

first interpolation means (31) for performing raster interpolation in response to a brightness signal (Y_CP) read out of said first memory means (27, 28) in accordance with said control signal (FM_ABC) and said brightness reinforcing signal (Y_HELPER);

first one line delay means (91) for delaying the raster-interpolated brightness signal (Y_OUT_FILM) by one line under a film mode; and

second interpolation means (30) for performing raster interpolation in response to a color signal (UV_CP) read out of said second memory means (83) in accordance with said control signal (FM_ABC).

12. A television receiver as set forth in claim 11, **characterized in that**
said first interpolation means (31) is comprised of:

first delay means (42a...42d, 44a...44d; 102a...102d, 104a...104d) for delaying said brightness signal (Y_CP) and brightness reinforcing signal (Y_HELPER) read out said first memory means (27, 28), and outputting a plurality of raster signals;

first multiplier means (46a...46j; 106a...106j) for multiplying each of a plurality of raster signals outputted from said delay means (42a...42d, 44a...44d; 102a...102d, 104a..104d) with a predetermined coefficient (Ka0... Ka4, Kb0...Kb4); and

first adding means (46k; 107) for adding a plurality of raster signals outputted from said multiplier means (46a... 46j; 106a... 106j);

said second interpolation means (30) is comprised of:

second delay means (52a...52f; 109a...109f) for delaying said color signal (UV_CP) read out of said second memory means (83) and outputting a plurality of raster signals;

second multiplier means (54a...54g; 115a...115g) for multiplying a predetermined coefficient (K0...K6) to each of a plurality of raster signals outputted from said delay means (52a...52f; 109a...109f); and

second adding means (54h; 115h) for adding a plurality of raster signals outputted from said multiplier means (54a...54g; 115a...115g).

**13.** A television receiver as set forth in claim 12, **characterized in that** at least a part (109a...109d) of said second memory means (109a...109f) is used as said first one line delay means and in that there is provided means (108, 111a...111d, 112) for supplying an output signal (Y_OUT_FILM) from said first adding means (107) to said second delay means (109a...109d) and taking it out of said second delay means (109a...109d) after delaying of a predetermined period.

**14.** A television receiver as set forth in claim 13, **characterized in that** an output signal (Y_OUT_FILM) from said first adding means (107) is supplied to said second delay means (109a...109d) when a transmitted image signal is in the film mode as a result of discrimination with said discrimination means (4).

**15.** A television receiver as set forth in claim 11, **characterized in that** said first interpolation means (31) and second interpolation means (30) are composed of a digital signal processor.

**Patentansprüche**

**1.** Rasterinterpolationsvorrichtung (10) zum Empfang eines Bildsignals eines Hauptbildteils, welcher im Letter-Box-Format übertragen wird, und eines Übertragungssignals mit einem Helligkeitsaufbesserungssignal (Y_HELPER) zur Aufbesserung einer Vertikalauflösung eines Helligkeitssignals (Y_CP) des Bildsignals des Hauptbildteils durch Vorsehen einer effektiven Zeile mit Ausnahme eines Teils, in dem der Hauptbildteil empfangen wird, und zum Verarbeiten des empfangenen Signals, umfassend:

ein erstes Speichermittel (27, 28) zum Speichern des empfangenen Helligkeitssignals (Y_CP) und des Helligkeitsaufbesserungssignals (Y_HELPER);

ein zweites Speichermittel (83) zum Speichern eines empfangenen Farbsignals (UV_CP);

ein Steuermittel zur Steuerung eines Einschreibens und eines Auslesens der ersten und zweiten Speichermittel (27, 28, 83) durch Anlegen des selben Steuersignals (FM_ABC) an das erste Speichermittel (27, 28) und das zweite Speichermittel (83);

ein erstes Interpolationsmittel (31) zur Durchführung einer Rasterinterpolation abhängig von einem entsprechend des Steuersignals (FM_ABC) aus dem ersten Speichermittel (27, 28) ausgelesenen Helligkeitssignal (Y_CP) und dem Helligkeitsaufbesserungssignal (Y_HELPER);

ein erstes Einzeilenverzögerungsmittel (91) zur Verzögerung des rasterinterpolierten Helligkeitssignals (Y_OUT_FILM) um eine Zeile in einem Film-Modus; und

ein zweites Interpolationsmittel (30) zur Durchführung einer Rasterinterpolation abhängig von einem entsprechend des Steuersignals (FM_ABC) aus dem zweiten Speichermittel (83) ausgelesenen Farbsignal (UV_CP).

**2.** Rasterinterpolationsvorrichtung (10) nach Anspruch 1, **dadurch gekennzeichnet, dass** ein Aufbesserungssignal-Demodulatormittel (2) vorhanden ist, um ein in den über den Hauptbildteil übertragenen Signalen enthaltenes Signal zu demodulieren und das Helligkeitsaufbesserungssignal (Y_HELPER) zu erhalten, und dass das demodulierte Helligkeitsaufbesserungssignal (Y_HELPER) in dem ersten Speichermittel (27, 28) gespeichert wird.

**3.** Rasterinterpolationsvorrichtung (10) nach Anspruch 2, **dadurch gekennzeichnet, dass** das Steuermittel das erste Speichermittel (27, 28) so steuert, dass es umgeordnet wird, wenn das Helligkeitssignal (Y_CP) und das Helligkeitsaufbesserungssignal (Y_HELPER) aus dem ersten Speichermittel (27, 28) ausgelesen werden.

4. Rasterinterpolationsvorrichtung (10) nach Anspruch 2, **dadurch gekennzeichnet, dass** das Steuermittel das erste Speichermittel (27, 28) so steuert, dass es umgeordnet wird, wenn das Helligkeitssignal (Y_CP) und das Helligkeitsaufbesserungssignal (Y_HELPER) in das erste Speichermittel (27, 28) eingeschrieben werden.

5. Rasterinterpolationsvorrichtung (10) nach Anspruch 2, **dadurch gekennzeichnet, dass** das Steuermittel das zweite Speichermittel (83) so steuert, dass jedes bestimmte Raster Dummy-Daten ausgegeben werden, wenn das Farbsignal (UV_CP) aus dem zweiten Speichermittel (83) ausgelesen wird.

6. Rasterinterpolationsvorrichtung (10) nach Anspruch 2, **dadurch gekennzeichnet, dass** das Steuermittel das zweite Speichermittel (83) so steuert, dass jedes bestimmte Raster Dummy-Daten eingeschrieben werden, wenn das Farbsignal (UV_CP) in das zweite Speichermittel (83) eingeschrieben wird.

7. Rasterinterpolationsvorrichtung (10) nach Anspruch 1, **dadurch gekennzeichnet, dass**
das erste Interpolationsmittel (31) umfasst:

ein erstes Verzögerungsmittel (42a...42d, 44a...44d; 102a...102d, 104a...104d) zur Verzögerung des Helligkeitssignals (Y_CP) und des Helligkeitsaufbesserungssignals (Y_HELPER), die aus dem ersten Speichermittel (27, 28) ausgelesenen wurden, und zur Ausgabe einer Mehrzahl von Rastersignalen;
ein erstes Multiplikatormittel (46a...46j; 106a...106j) zur Multiplikation jedes der Mehrzahl von von dem Verzögerungsmittel (42a...42d, 44a...44d; 102a...102d, 104a...104d) ausgegebenen Rastersignalen mit einem bestimmten Koeffizienten (Ka0...Ka4. Kb0...Kb4); und
ein erstes Addierermittel (46k; 107) zur Addition einer Mehrzahl von von dem Multiplikatormittel (46a...46j; 106a...106j) ausgegebenen Rastersignalen;
das zweite Interpolationsmittel (30) umfasst:

ein zweites Verzögerungsmittel (52a...52f; 109a...109f) zur Verzögerung des aus dem zweiten Speichermittel (83) ausgelesenen Farbsignals (UV_CP) und zur Ausgabe einer Mehrzahl von Rastersignalen;
ein zweites Multiplikatormittel (54a...54g; 115a...115g) zur Multiplikation jedes der Mehrzahl von von dem Verzögerungsmittel (52a...52f; 109a...109f) ausgegebenen Rastersignalen mit einem bestimmten Koeffizienten (K0...K6); und
ein zweites Addierermittel (54h; 115h) zur Addition einer Mehrzahl von von dem Multiplikatormittel (54a...54g; 115a...115g) ausgegebenen Rastersignalen.

8. Rasterinterpolationsvorrichtung (10) nach Anspruch 7, **dadurch gekennzeichnet, dass** wenigstens ein Teil (109a...109d) des zweiten Verzögerungsmittels (109a...109f) als das erste Einzeilenverzögerungsmittel verwendet wird, und dass ein Mittel (108, 111a...111d, 112) vorhanden ist. um ein Ausgangssignal (Y_OUT_FILM) von dem ersten Addierermittel (107) an das zweite Verzögerungsmittel (109a...109d) anzulegen und es nach Ablauf einer bestimmten Verzögerungszeit von dem zweiten Verzögerungsmittel (109a...109d) abzugreifen.

9. Rasterinterpolationsvorrichtung nach Anspruch 8, **dadurch gekennzeichnet, dass** ein Dekodiermittel (4) vorhanden ist, um ein in den über eine bestimmte Leitung empfangenen Signalen enthaltenes Unterscheidungssignal zu detektieren und das Unterscheidungssignal zu dekodieren, wobei ein Ausgangssignal (Y_OUT_FILM) von dem ersten Addierermittel (107) an das zweite Verzögerungsmittel (109a...109d) angelegt wird, wenn das übertragene Bildsignal als Ergebnis der Dekodierung des Unterscheidungssignals in dem Dekodiermittel (4) als Film-Modus-Signal bestimmt ist.

10. Rasterinterpolationsvorrichtung nach Anspruch 8, **dadurch gekennzeichnet, dass** das erste Interpolationsmittel (31) und das zweite Interpolationsmittel (30) aus einem digitalen Signalprozessor bestehen.

11. Fernsehempfänger zum Empfang eines Bildsignals eines Hauptbildteils, welcher im Letter-Box-Format übertragen wird, und eines Übertragungssignals mit einem Helligkeitsaufbesserungssignal (Y_HELPER) zur Aufbesserung einer Vertikalauflösung eines Helligkeitssignals (Y_CP) des Bildsignals des Hauptbildteils durch Vorsehen einer effektiven Zeile mit Ausnahme eines Teils, in dem der Hauptbildteil empfangen wird, umfassend:

ein Empfängermittel zum Empfang des Übertragungssignals;
ein Trennmittel (3, 2) zur Trennung eines Helligkeitssignals (Y_CP). eines Farbsignals (UV_CP) und eines

Helligkeitsaufbesserungssignals (Y_HELPER) aus dem empfangenen Signal;

ein Unterscheidungsmittel (4) zur Erkennung eines Unterscheidungssignals aus dem empfangenen Signal und zum Unterscheiden von Modusinformation eines Bildsignals;

ein erstes Speichermittel (27, 28) zum Speichern des empfangenen Helligkeitssignals (Y_CP) und des Helligkeitsaufbesserungssignals (Y_HELPER);

ein zweites Speichermittel (83) zum Speichern eines empfangenen Farbsignals (UV_CP);

ein Steuermittel zur Steuerung eines Einschreibens und eines Auslesens der ersten und zweiten Speichermittel (27, 28, 83) durch Anlegen des selben Steuersignals (FM_ABC) an das erste Speichermittel (27, 28) und das zweite Speichermittel (83) abhängig von der von dem Unterscheidungsmittel (4) unterschiedenen Modusinformation;

ein erstes Interpolationsmittel (31) zur Durchführung einer Rasterinterpolation abhängig von einem entsprechend des Steuersignals (FM_ABC) aus dem ersten Spelchermittel (27, 28) ausgelesenen Helligkeitssignal (Y_CP) und des Helligkeitsaufbesserungssignals (Y_HELPER);

ein erstes Einzeilenverzögerungsmittel (91) zur Verzögerung des rasterinterpolierten Helligkeltssignals (Y_OUT_FILM) um eine Zeile in einem Film-Modus; und

ein zweites Interpolationsmittel (30) zur Durchführung einer Rasterinterpolation abhängig von einem entsprechend des Steuersignals (FM_ABC) aus dem zweiten Speichermittel (83) ausgelesenen Farbsignal (UV_CP).

**12.** Fernsehempfänger nach Anspruch 11, **dadurch gekennzeichnet, dass**

das erste Interpolationsmittel (31) umfasst:

ein erstes Verzögerungsmittel (42a...42d, 44a...44d; 102a...102d, 104a...104d) zur Verzögerung des Helligkeitssignals (Y_CP) und des Helligkeitsaufbesserungssignals (Y_HELPER). die aus dem ersten Speichermittel (27, 28) ausgelesenen wurden, und zur Ausgabe einer Mehrzahl von Rastersignalen;

ein erstes Multiplikatormittel (46a...46j; 106a...106j) zur Multiplikation jedes der Mehrzahl von von dem Verzögerungsmittel (42a...42d, 44a...44d; 102a...102d, 104a...104d) ausgegebenen Rastersignalen mit einem bestimmten Koeffizienten (Ka0...Ka4, Kb0...Kb4); und

ein erstes Addierermittel (46k, 107) zur Addition einer Mehrzahl von von dem Multiplikatormittel (46a...46j; 106a...106j) ausgegebenen Rastersignalen;

das zweite Interpolationsmittel (30) umfasst:

ein zweites Verzögerungsmittel (52a...52f; 109a...109f) zur Verzögerung des aus dem zweiten Speichermittel (83) ausgelesenen Farbsignals (UV_CP) und zur Ausgabe einer Mehrzahl von Rastersignalen;

ein zweites Multiplikatormittel (54a...54g; 115a...115g) zur Multiplikation jedes der Mehrzahl von von dem Verzögerungsmittel (52a...52f; 109a...109f) ausgegebenen Rastersignalen mit einem bestimmten Koeffizienten (K0...K6); und

ein zweites Addierermittel (54h; 115h) zur Addition einer Mehrzahl von von dem Multiplikatormittel (54a...54g; 115a...115g) ausgegebenen Rastersignalen.

**13.** Fernsehempfänger nach Anspruch 12, **dadurch gekennzeichnet, dass** wenigstens ein Teil (109a...109d) des zweiten Verzögerungsmittels (109a...109f) als das erste Einzeilenverzögerungsmittel verwendet wird, und dass ein Mittel (108, 111a...111d, 112) vorhanden ist, um ein Ausgangssignal (Y_OUT_FILM) von dem ersten Addierermittel (107) an das zweite Verzögerungsmittel (109a...109d) anzulegen und es nach Ablauf einer bestimmten Verzögerungszeit von dem zweiten Verzögerungsmittel (109a...109d) abzugreifen.

**14.** Fernsehempfänger nach Anspruch 13, **dadurch gekennzeichnet, dass** ein Ausgangssignal (Y_OUT_FILM) von dem ersten Addierermittel (107) an das zweite Verzögerungsmittel (109a...109d) angelegt wird, wenn ein übertragenes Bildsignal als Ergebnis der Unterscheidung des Unterscheidungsmittels (4) als Film-Modus-Signal bestimmt ist.

**15.** Fernsehempfänger nach Anspruch 11, **dadurch gekennzeichnet, dass** das erste Interpolationsmittel (31) und das zweite Interpolationsmittel (30) aus einem digitalen Signalprozessor bestehen.

**Revendications**

**1.** Dispositif d'interpolation de trame (10) en vue de recevoir un signal d'image d'une partie d'image principale qui est transmise sous la forme d'une boîte à lettres et un signal de radiodiffusion avec un signal de renforcement de luminosité (Y_AIDE) pour renforcer une résolution verticale d'un signal de luminosité (Y_CP) du signal d'image de la partie d'image principale en appliquant une ligne effective à l'exception d'une partie recevant le signal d'image de la partie d'image principale et le signal reçu est traité, comprenant :

des premiers moyens de mémoire (27, 28) pour mémoriser le signal de luminosité reçu (Y_CP) et le signal de renforcement de luminosité (Y_AIDE) ;

des seconds moyens de mémoire (83) pour mémoriser un signal couleur reçu (UV_CP) ;

des moyens de commande en vue de commander une opération d'écriture et une opération d'extraction desdits premiers et seconds moyens de mémoire (27, 28, 83) en appliquant le même signal de commande (FM_ABC) auxdits premiers moyens de mémoire (27, 28) et auxdits seconds moyens de mémoire (83) ;

des premiers moyens d'interpolation (31) afin d'effectuer une interpolation de trame en réponse à un signal de luminosité (Y_CP) extrait desdits premiers moyens de mémoire (27, 28) conformément audit signal de commande (FM_ABC) et audit signal de renforcement de luminosité (Y_AIDE) ;

des premiers moyens de retard d'une ligne (91) pour retarder le signal de luminosité interpolé de trame (Y_OUT_FILM) d'une ligne en mode film ; et

des seconds moyens d'interpolation (30) pour effectuer une interpolation de trame en réponse à un signal de couleur (UV_CP) extrait desdits seconds moyens de mémoire (83) conformément audit signal de commande (FM ABC).

2. Dispositif d'interpolation de trame (10) selon la revendication 1, **caractérisé en ce qu'**il est prévu des moyens de démodulation de signal de renforcement (2) afin de démoduler un signal dans lesdits signaux reçus transmis par l'intermédiaire de ladite partie d'image principale et pour obtenir ledit signal de renforcement de luminosité (Y_AIDE), et ledit signal de renforcement de luminosité démodulé (Y_AIDE) est mémorisé dans lesdits premiers moyens de mémoire (27, 28).

3. Dispositif d'interpolation de trame (10) selon la revendication 2, **caractérisé en ce que** lesdits moyens de commande commandent lesdits premiers moyens de mémoire (27, 28) de telle manière qu'ils soient brassés lorsque ledit signal de luminosité (Y_CP) et le signal de renforcement de luminosité (Y_AIDE) sont extraits desdits premiers moyens de mémoire (27, 28).

4. Dispositif d'interpolation de trame (10) selon la revendication 2, **caractérisé en ce que** lesdits moyens de commande commandent lesdits premiers moyens de mémoire (27, 28) de telle manière qu'ils soient brassés lorsque ledit signal de luminosité (Y_CP) et le signal de renforcement de luminosité (Y_AIDE) sont écrits dans lesdits premiers moyens de mémoire (27, 28).

5. Dispositif d'interpolation de trame (10) selon la revendication 2, **caractérisé en ce que** lesdits moyens de commande commandent lesdits seconds moyens de mémoire (83) de telle manière que des données fictives soient délivrées à chaque trame prédéterminée lorsque ledit signal de couleur (UV_CP) est extrait desdits seconds moyens de mémoire (83).

6. Dispositif d'interpolation de trame (10) selon la revendication 2, **caractérisé en ce que** lesdits moyens de commande commandent lesdits seconds moyens de mémoire (83) de telle manière que des données fictives soient écrites à chaque trame prédéterminée lorsque ledit signal de couleur (UV_CP) est écrit dans lesdits seconds moyens de mémoire (83).

7. Dispositif d'interpolation de trame (10) selon la revendication 1, **caractérisé en ce que**
lesdits premiers moyens d'interpolation (31). comportent :

des premiers moyens de retard (42a...42d, 44a...44d ; 102a...102d, 104a...104d) pour retarder ledit signal de luminosité (Y_CP) et le signal de renforcement de luminosité (Y AIDE) extraits desdits premiers moyens de mémoire (27, 28) et délivrer une pluralité de signaux de trame ;

des premiers moyens multiplicateurs (46a...46j ; 106a...106j) pour multiplier chacun d'une pluralité de signaux de trame délivrés par lesdits moyens de retard (42a...42d, 44a...44d ; 102a...102d, 104a...104d) par un coefficient prédéterminé (Ka0...Ka4, Kb0...Kb4) ; et

des premiers moyens d'addition (46k ; 107) pour additionner une pluralité de signaux de trame délivrés par lesdits moyens multiplicateurs (46a...46j ; 106a...106j) ;

lesdits seconds moyens d'interpolation (30) comportent :

des seconds moyens de retard (52a...52f ; 109a...109f) pour retarder ledit signal de couleur (UV_CP) extrait desdits seconds moyens de mémoire (83) et délivrer une pluralité de signaux de trame ;

des seconds moyens multiplicateurs (54a...54g ; 115a...115g) pour multiplier par un coefficient prédéterminé (K0...K6) chacun d'une pluralité de signaux de trame délivrés par lesdits moyens de retard (52a...52f ; 109a...109f) ; et

des seconds moyens d'addition (54h ; 115h) pour additionner une pluralité de signaux de trame délivrés par lesdits moyens multiplicateurs (54a...54g ; 115a...115g).

8. Dispositif d'interpolation de trame (10) selon la revendication 7, **caractérisé en ce qu'**au moins une partie (109a...109d) desdits seconds moyens de retard (109a...109f) est utilisée en tant que lesdits premiers moyens de retard d'une ligne et en ce qu'il est prévu des moyens (108, 111a...111d, 112) pour délivrer un signal de sortie (Y_OUT_FILM) desdits premiers moyens d'addition (107) auxdits seconds moyens de retard (109a...109d) et le prélever desdits seconds moyens de retard (109a...109d) après retard d'une période prédéterminée.

9. Dispositif d'interpolation de trame selon la revendication 8, **caractérisé en ce qu'**il est prévu des moyens de décodage (4) pour détecter un signal de discrimination desdits signaux reçus transmis durant une ligne prédéterminée et décoder le signal de discrimination, un signal de sortie (Y_OUT_FILM) desdits premiers moyens d'addition (107) est appliqué auxdits seconds moyens de retard (109a...109d) lorsque le signal d'image transmis est en mode film en résultat du décodage du signal de discrimination par lesdits moyens de décodage (4).

10. Dispositif d'interpolation de trame selon la revendication 8, **caractérisé en ce que** lesdits premiers moyens d'interpolation (31) et lesdits seconds moyens d'interpolation (30) sont constitués d'un processeur de signaux numériques.

11. Récepteur de télévision en vue de recevoir un signal d'image d'une partie d'image principale qui est transmis sous la forme d'une boîte à lettres et un signal de radiodiffusion avec un signal de renforcement de luminosité (Y_AIDE) pour renforcer une résolution verticale d'un signal de luminosité (Y_CP) du signal d'image de la partie d'image principale en appliquant une ligne effective à l'exception d'une partie recevant le signal d'image de la partie d'image principale, comportant :

des moyens de réception pour recevoir ledit signal de radiodiffusion ;

des moyens de séparation (3,2) pour séparer un signal de luminosité (Y_CP), un signal de couleur (UV_CP) et un signal de renforcement de luminosité (Y_AIDE) du signal reçu ;

des moyens de discrimination (4) pour détecter un signal de discrimination du signal reçu et discriminer une information de mode d'un signal d'image ;

des premiers moyens de mémoire (27, 28) pour mémoriser le signal de luminosité reçu (Y_CP) et le signal de renforcement de luminosité (Y_AIDE) ;

des seconds moyens de mémoire (83) pour mémoriser un signal de couleur reçu (UV_CP) ;

des moyens de commande pour commander une opération d'écriture et une opération d'extraction desdits premiers et seconds moyens de mémoire en délivrant le même signal de commande (FM_ABC) auxdits premiers moyens de mémoire (27, 28) et auxdits seconds moyens de mémoire (83) en réponse à l'information de mode discriminée par lesdits moyens de discrimination (4) ;

des premiers moyens d'interpolation (31) pour effectuer une interpolation de trame en réponse à un signal de luminosité (Y_CP) extrait desdits premiers moyens de mémoire (27, 28) conformément audit signal de commande (FM_ABC) et audit signal de renforcement de luminosité (Y_AIDE) ;

des premiers moyens de retard d'une ligne (91) pour retarder le signal de luminosité interpolé en trame (Y_OUT_FILM) d'une ligne en mode film ; et

des seconds moyens d'interpolation (30) pour effectuer une interpolation de trame en réponse à un signal de couleur (UV_CP) extrait desdits seconds moyens de mémoire (83) conformément audit signal de commande (FM_ABC).

12. Récepteur de télévision selon la revendication 11, **caractérisé en ce que** lesdits premiers moyens d'interpolation (31) comportent :

des premiers moyens de retard (42a...42d, 44a...44d ; 102a...102d, 104a...104d) pour retarder ledit signal de luminosité (Y_CP) et le signal de renforcement de luminosité (Y_AIDE) extraits desdits premiers moyens de mémoire (27, 28), et délivrer une pluralité de signaux de trames ;

des premiers moyens multiplicateurs (46a...46j ; 106a...106j) pour multiplier chacun d'une pluralité de signaux de trame délivrés par lesdits moyens de retard (42a...42d, 44a...44d ; 102a...102d, 104a...104d) par un coefficient prédéterminé (Ka0...Ka4, Kb0...Kb4) ; et

des premiers moyens d'addition (46k ; 107) pour additionner une pluralité de signaux de trame délivrés par lesdits moyens multiplicateurs (46a...46j ; 106a...106j) ;

lesdits seconds moyens d'interpolation (30) comportent :

des seconds moyens de retard (52a...52f ; 109a...109f) pour retarder ledit signal de couleur (UV_CP) extrait desdits seconds moyens de mémoire et délivrer une pluralité de signaux de trame ;

des seconds moyens multiplicateurs (54a...54g ; 115a...115g) pour multiplier par un coefficient prédéterminé (K0...K6) chacun d'une pluralité de signaux de trame délivrés par lesdits moyens de retard (52a...52f ; 109a...109f) ; et

des seconds moyens d'addition (54h ; 115H) pour additionner une pluralité de signaux de trame délivrés par lesdits moyens multiplicateurs (54a...54g ; 115a...115g).

13. Récepteur de télévision selon la revendication 12, **caractérisé en ce qu'**au moins une partie (109a...109d) desdits seconds moyens de mémoire (109a...109f) est utilisée en tant que lesdits premiers moyens de retard d'une ligne et en ce qu'il est prévu des moyens (108, 111a...111d, 112) pour délivrer un signal de sortie (Y_OUT_FILM) desdits premiers moyens d'addition (107) auxdits seconds moyens de retard (109a...109d) et le prélever desdits seconds moyens de retard (109a...109d) après retard d'une période prédéterminée.

14. Récepteur de télévision selon la revendication 13, **caractérisé en ce qu'**un signal de sortie (Y_OUT_FILM) desdits premiers moyens d'addition (107) est appliqué auxdits seconds moyens de retard (109a...109d) lorsqu'un signal d'image transmis est en mode film en résultat d'une discrimination par lesdits moyens de discrimination (4).

15. Récepteur de télévision selon la revendication 11, **caractérisé en ce que** lesdits premiers moyens d'interpolation (31) et lesdits seconds moyens d'interpolation (30) sont constitués d'un processeur de signaux numériques.

FIG. 1

▉ : LINE RANDOM ACCESS FIELD MEMORY

UV_CP 4 — 21 COLOR SIGNAL INPUT

Y_HELPER 8 — 22 HELPER SIGNAL INPUT

Y_CP 8 — 23 BRIGHTNESS SIGNAL INPUT

24

HELPER CHANGING-OVER CONTROL SIGNAL SEL_HLP

25 DELAY CIRCUIT — DELAY LINE CONTROL SIGNAL

8

26 FM — FM CONTROL SIGNAL

27 — FM_ABC CONTROL SIGNAL

FM_A 8

FM_B 8 — 28

FM_C 4 — 83

COLOR SIGNAL VERTICAL FILTERING CONTROL SIGNAL

BRIGHTNESS SIGNAL VERTICAL FILTERING CONTROL SIGNAL

30 COLOR SIGNAL VERTICAL FILTERING PROCESSING — UV_OUT 32 COLOR SIGNAL OUTPUT

31 BRIGHTNESS SIGNAL VERTICAL FILTERING PROCESSING — Y_OUT 33 BRIGHTNESS SIGNAL OUTPUT

BRIGHTNESS SIGNAL VERTICAL FILTERING CONTROL SIGNAL

22

FIG. 2

BRIGHTNESS SIGNAL VERTICAL FILTERING PROCESSING
(FILM MODE)

EP 0 757 481 B1

F I G. 3

COLOR SIGNAL VERTICAL FILTERING PROCESSING
( FILM MODE )

EP 0 757 481 B1

# FIG. 4

# F I G. 5

| UV_IN LINE # | SEL_IN | SEL_OUT | SEL0 | SEL1 | SEL2 | SEL3 |
|---|---|---|---|---|---|---|
| 61 | a1 | b0 | 0 | 1 | 0 | 0 |
| 62 | a2 | b1 | 0 | 0 | 1 | 0 |
| 63 | a3 | b2 | 0 | 0 | 0 | 1 |
| X | a0 | b3 | 1 | 0 | 0 | 0 |
| 64 | a1 | b0 | 0 | 1 | 0 | 0 |
| ⋮ | ⋮ | ⋮ | ⋮ | ⋮ | ⋮ | ⋮ |
| 374 | a2 | b1 | 0 | 0 | 1 | 0 |
| 375 | a3 | b2 | 0 | 0 | 0 | 1 |
| X | a0 | b3 | 1 | 0 | 0 | 0 |
| 376 | a1 | b0 | 0 | 1 | 0 | 0 |
| ⋮ | ⋮ | ⋮ | ⋮ | ⋮ | ⋮ | ⋮ |

EP 0 757 481 B1

# FIG. 6

▉ : LINE RANDOM ACCESS FIELD MEMORY

UV_OUT — 32 COLOR SIGNAL OUTPUT

Y_OUT — 33 BRIGHTNESS SIGNAL OUTPUT

30 COLOR SIGNAL VERTICAL FILTERING PROCESSING

31 BRIGHTNESS SIGNAL VERTICAL FILTERING PROCESSING

BRIGHTNESS SIGNAL VERTICAL FILTERING CONTROL SIGNAL

120 FM_D / FM_A

27 FM_ABC CONTROL SIGNAL

COLOR SIGNAL VERTICAL FILTERING CONTROL SIGNAL

26 FM

FM CONTROL SIGNAL

25 DELAY CIRCUIT

DELAY LINE CONTROL SIGNAL

UV_CP — 4 — 21 COLOR SIGNAL INPUT

Y_HELPER — 8 — 22 HELPER SIGNAL INPUT

Y_CP — 8 — 23 BRIGHTNESS SIGNAL INPUT

24

HELPER CHANGING-OVER CONTROL SIGNAL SEL_HLP

F I G. 7

PAL PLUS COMPLEX IMAGE SIGNAL

2 HELPER SIGNAL EXTRACTING PROCESSING

3 COLOR PLUS PROCESSING (THREE-DIMENSIONAL Y/C SEPARATION)

4 PAL PLUS MODE DECODE PROCESSING

5 TIMING GENERATOR

Y_HELPER

Y_CP

UV_CP

6 BRIGHTNESS SIGNAL RASTER INTERPOLATION PROCESSING

7 COLOR SIGNAL RASTER INTERPOLATION PROCESSING

10 RASTER INTERPOLATION PROCESSING

8 MATRIX PROCESSING

R G B

# FIG. 8

121 ANTENNA

TUNER ~122

VIF ~123

124

A/D CONVERTER

PAL PLUS COMPLEX IMAGE SIGNAL

2

HELPER SIGNAL EXTRACTING PROCESSING

Y_HELPER

3

COLOR PLUS PROCESSING [THREE-DIMENSIONAL Y/C SEPARATION]

Y_CP

UV_CP

4

PAL PLUS MODE DECODE PROCESSING

5

TIMING GENERATOR

8

MATRIX PROCESSING

BRIGHTNESS SIGNAL RASTER INTERPOLATION PROCESSING

6

7

COLOR SIGNAL RASTER INTERPOLATION PROCESSING

10 RASTER INTERPOLATION PROCESSING

125

R
G
B

CRT

EP 0 757 481 B1

# FIG. 9

PAL PLUS
COMPLEX
IMAGE
SIGNAL VC

I INPUT

**2** HELPER SIGNAL EXTRACTING PROCESSING → Y_HELPER

**3** COLOR PLUS PROCESSING (THREE-DIMENSIONAL Y/C SEPARATION) → Y_CP, UV_CP

**4** PAL PLUS MODE DECODE PROCESSING → FILM/CAMERA MODE

**5** TIMING GENERATOR

**6** BRIGHTNESS SIGNAL RASTER INTERPOLATION PROCESSING → Y_OUT

**7** COLOR SIGNAL RASTER INTERPOLATION PROCESSING → UV_OUT

**10** RASTER INTERPOLATION PROCESSING

**8** MATRIX PROCESSING

**12 OUTPUT**
R OUTPUT
G OUTPUT
B OUTPUT

EP 0 757 481 B1

# F I G. IOA

4
16
3 9

NON-IMAGE PART HELPER
SIGNAL HI CORRESPONDING
TO 36 LINES

MAIN IMAGE PART SIGNAL M
CORRESPONDING TO 215
LINES

NON-IMAGE PART HELPER
SIGNAL H2 CORRESPONDING
TO 36 LINES

PAL PLUS SIGNAL
ORIGINAL IMAGE

# F I G. IOB

4
3

MAIN IMAGE PART SIGNAL

NON-IMAGE PART HELPER
SIGNAL

3:I SHUFFLING
PROCESSING

# F I G. IOC

16
9

AFTER RASTER INTERPOLATION
AND AFTER HORIZONTAL
EXTENSION PROCESSING

# FIG. 11

■ : LINE RANDOM ACCESS FIELD MEMORY

UV_CP ○ 4
21 COLOR SIGNAL INPUT

Y_HELPER ○ 8
22 HELPER SIGNAL INPUT

Y_CP ○ 8
23 BRIGHTNESS SIGNAL INPUT

1
○ ○ 0
24 SELECTOR

HELPER CHANGING-OVER CONTROL SIGNAL SEL_HLP

25 DELAY CIRCUIT 8

DELAY LINE CONTROL SIGNAL

8

26 FM

FM CONTROL SIGNAL

8

27 FM_A 8

28 FM_B 8

FM_A, FM_B CONTROL SIGNAL

29 FM_C 4

FM_C CONTROL SIGNAL

4

30 COLOR SIGNAL VERTICAL FILTERING PROCESSING

UV_OUT ○
32 COLOR SIGNAL OUTPUT

31 BRIGHTNESS SIGNAL VERTICAL FILTERING PROCESSING

Y_OUT ○
33 BRIGHTNESS SIGNAL OUTPUT

BRIGHTNESS SIGNAL VERTICAL FILTERING CONTROL SIGNAL

COLOR SIGNAL VERTICAL FILTERING CONTROL SIGNAL

EP 0 757 481 B1

# F I G. I2

10

| |
| HELPER SIGNAL |
| MAIN IMAGE SIGNAL |
| HELPER SIGNAL |

SEL_HLP

# F I G. I3A

FM_B
INPUT SIGNAL

IB        2A        2B

HELPER HI        HELPER H2

MAIN IMAGE M

# F I G. I3B

FM_A
INPUT SIGNAL

IA        IB        2A

HELPER HI        HELPER H2

MAIN IMAGE M

33

FIG. 14A

FM_B OUTPUT SIGNAL

1B 1B 2B

FIG. 14B

FM_A OUTPUT SIGNAL

1A 1A 2A

INPUT LINE NO.

FIG. 14C

MAIN IMAGE M

HELPER HI

TIME t

| INPUT LINE NO. | | | | | | | | |
|---|---|---|---|---|---|---|---|---|
| A FIELD MAIN IMAGE LINE | 61 | 62 | 63 | 64 | 65 | 66 | 67 68 ···· |
| A FIELD HELPER LINE | | | @25 | | | @26 | |
| FM_A MEMORY OUTPUT | 61 | 62 | 63 @25 | 64 | 65 | 66 @26 | 67 68 ···· |
| B FIELD MAIN IMAGE LINE | 373 | 374 | 375 | 376 | 377 | 378 | 379 380 ···· |
| B FIELD HELPER LINE | | | @337 | | | @339 | |
| FM_B MEMORY OUTPUT | 373 | 374 | 375 @337 | 376 | 377 | 378 @339 | 379 380 ···· |

EP 0 757 481 B1

FIG. 15A

FM_C INPUT SIGNAL

1B    1A    2B

MAIN IMAGE

FIG. 15B

FM_C OUTPUT SIGNAL

1B    1A    2B

INPUT LINE NO.

FIG. 15C

MAIN IMAGE M

→ TIME t

MAIN IMAGE LINE          373 374 375    376 377 378    379 380 · · · · ·

FM_C MEMORY OUTPUT    373 374 375 × 376 377 378 × 379 380 · · · · ·

35

# F I G. 16A

FM_B
INPUT SIGNAL

1A          1B          2A

HELPER HI          HELPER H2

MAIN IMAGE M

# F I G. 16B

FM_C
INPUT SIGNAL

1A          1B          2A

MAIN IMAGE M

# F I G. 17A

FM_B OUTPUT SIGNAL

# F I G. 17B

FM_C OUTPUT SIGNAL

# F I G. 17C

INPUT LINE NO.

MAIN IMAGE M

HELPER HI

TIME t

| A FIELD MAIN IMAGE LINE | 61 62 63 | | 64 65 66 | | 67 68 · · · · |
|---|---|---|---|---|---|
| A FIELD HELPER LINE | | @25 | | @26 | · · · · |
| FM_B MEMORY OUTPUT | 61 62 63 | @25 | 64 65 66 | @26 | 67 68 · · · · |
| FM_C MEMORY OUTPUT | 61 62 63 | X | 64 65 66 | X | 67 68 · · · · |

EP 0 757 481 B1

# FIG. 18

BRIGHTNESS SIGNAL VERTICAL FILTERING PROCESSING
(FILM MODE)

EP 0 757 481 B1

# F I G. 19

COLOR SIGNAL VERTICAL FILTERING PROCESSING
(FILM MODE)

EP 0 757 481 B1

# F I G. 20

| A FIELD BRIGHTNESS INPUT SIGNAL | INPUT LINE NO. | B FIELD BRIGHTNESS INPUT SIGNAL | INPUT LINE NO. | COLOR INPUT SIGNAL | INPUT LINE NO. |
|---|---|---|---|---|---|
| YA0 | @25 | YB0 | @337 | C0 | 64 |
| YA1 | 63 | YB1 | 375 | C1 | X |
| YA2 | 62 | YB2 | 374 | C2 | 63 |
| YA3 | 61 | YB3 | 373 | C3 | 62 |
| YA4 | @24 | YB4 | @336 | C4 | 61 |
|  |  |  |  | C5 | X |
|  |  |  |  | C6 | 60 |

SIGNAL ALLOCATION WHEN THE INTERPOLATION SIGNAL AT THE 27th LINE IS CALCULATED
(FILM MODE)

EP 0 757 481 B1

# F I G. 21

Y_IN_B

61 INPUT

62a LM Y0
62b LM Y1
62c LM Y2
62d LM Y3
62e LM Y4
62f LM Y5
Y6

I0 64a ×
I1 64b ×
I2 64c ×
I3 64d ×
I4 64e ×
I5 64f ×
I6 64g ×

Σ 64h

64 AND CIRCUIT

DEC_Y_QMF_CAMERA

Y_OUT_CAMERA

UV_OUT
65

63 COEFFICIENT GENERATOR

BRIGHTNESS SIGNAL VERTICAL FILTERING PROCESSING
(CAMERA MODE)

COLOR SIGNAL VERTICAL FILTERING PROCESSING
(CAMERA MODE)

EP 0 757 481 B1

# F I G. 23

| BRIGHTNESS INPUT SIGNAL | INPUT LINE NO. | COLOR INPUT SIGNAL | INPUT LINE NO. |
|---|---|---|---|
| Y0 | 64 | C0 | 64 |
| Y1 | @25 | C1 | ✕ |
| Y2 | 63 | C2 | 63 |
| Y3 | 62 | C3 | 62 |
| Y4 | 61 | C4 | 61 |
| Y5 | @24 | C5 | ✕ |
| Y6 | 60 | C6 | 60 |

INTERPOLATION SIGNAL
SIGNAL ALLOCATION WHEN THE 27th LINE
SIGNAL IS CALCULATED
(CAMERA MODE)